# EUROPEAN PATENT SPECIFICATION

(11) **EP 4 187 800 B1**
(45) Date of publication and mention of the grant of the patent: **18.11.2026**
(21) Application number: 21850344.9
(22) Date of filing: 28.07.2021
(51) Int. Cl.: H04L 5/00

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 30.07.2020 CN 202010753330
(43) Date of publication of application: 31.05.2023
(73) Proprietor: Huawei Technologies Co., Ltd., Shenzhen, Guangdong 518129 (CN)
(72) Inventor: YU, Jian, Shenzhen, Guangdong 518129 (CN); GUO, Zhiheng, Shenzhen, Guangdong 518129 (CN)
(74) Representative: Maiwald GmbH
(86) International application number: PCT/CN2021/108982
(87) International publication number: WO 2022/022579

(56) References cited:
- EP-A1- 3 468 061
- WO-A1-2011/156939
- WO-A1-2016/127309
- WO-A1-2020/069147
- CN-A- 110 418 411
- CN-A- 110 447 258
- CN-A- 111 133 686
- US-A1- 2018 278 395
- US-A1- 2019 068 352
- US-A1- 2020 169 968
- HUAWEI: "OCC mapping scheme for downlink DMRS", 3GPP DRAFT; R1-103098 OCC MAPPING SCHEME FOR DOWNLINK DMRS 1.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510, 4 May 2010 (2010-05-04), XP050420174
- INTEL CORPORATION: "Low PAPR Reference Signals", vol. RAN WG1, no. Chengdu, China; 20181008 - 20181012, 29 September 2018 (2018-09-29), XP051518198, Retrieved from the Internet <URL:http://www.3gpp.org/ftp/tsg%5Fran/WG1%5FRL1/TSGR1%5F94b/Docs/R1%2D1810793%2Ezip> [retrieved on 20180929]
- ERICSSON: "On DL DMRS design", 3GPP DRAFT; R1-1703216, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20170213 - 20170217, 12 February 2017 (2017-02-12), Mobile Competence Centre ; 650, route des Lucioles ; F-06921 Sophia-Antipolis Cedex ; France , XP051210349

## Description

### TECHNICAL FIELD

This application relates to the field of communication technologies, and in particular, to a communication method and an apparatus.

### BACKGROUND

WO2011/156939A1 describes a method is in a radio network node for transmitting a reference signal over an antenna port, wherein the reference signal is transmitted in a code division multiplexing, CDM, group. It is described that the CDM group comprises at least two CDM subgroups, each CDM subgroup being transmitted on a different subcarrier. It is described that each CDM subgroup comprises resource elements. It is described that in a first step, the radio network node transmits the reference signal over a first CDM subgroup using an orthogonal cover code. It is described that the first CDM subgroup comprises resource elements in a first time slot and a subsequent time slot. It is described that in a further step, the radio network node transmits the reference signal over a second CDM subgroup using a permutation of the orthogonal cover code.

Huawei, "OCC mapping scheme for downlink DMRS", R1-103098, 3GPP TSG RAN WG1 meeting #61, Montreal, Canada, 10th - 14th May 2010, is a document for discussion and decision, and a mapping scheme for length 4 OCC is proposed.

US2018/2783395A1 describes that methods, apparatuses, and systems generally relate to a reference signal generation and mapping. It is described that a method comprises determining a first set of antenna ports for a demodulation reference signal (DM-RS) transmission; determining, based on the first set, a frequency index associated with four adjacent resource elements, wherein the four adjacent resource elements correspond to two adjacent symbols in a time axis and to two adjacent subcarriers in a frequency axis; generating, based on a first orthogonal cover code and a second orthogonal cover code, a DM-RS associated with the first set of antenna ports; and transmitting, via a mapping to the four adjacent resource elements, the DM-RS associated with the first set of antenna ports.

In fourth generation (fourth generation, 4G) and fifth generation (fifth generation, 5G) wireless communication systems, for example, a new radio access technology (new radio access technology, NR) system, that a demodulation reference signal (demodulation reference signal, DMRS) and a sounding reference signal (sounding reference signal, SRS) are used for network side channel estimation is defined. The SRS is used for channel state information (channel state information, CSI) measurement, and the DMRS is used for physical uplink shared channel (physical uplink shared channel, PUSCH) data demodulation. During CSI measurement and data demodulation, channel estimation needs to be first performed based on a pilot.

In uplink DMRS channel estimation, used waveform configurations are also closely related. In an NR system, two waveforms are supported: cyclic prefixed orthogonal frequency division multiplexing (cyclic prefixed orthogonal frequency division multiplexing, CP-OFDM) and discrete fourier transform-spread-orthogonal frequency division multiplexing (discrete fourier transform-spread-orthogonal frequency division multiplexing, DFT-S-OFDM) waveforms. A specific waveform to be used in uplink is configured through higher layer signaling. In the current NR system, the uplink DFT-S-OFDM waveform can support 8 layers of orthogonal pairing, and the CP-OFDM waveform can support 12 layers of orthogonal pairing. If a quantity of layers of pairing exceeds 8 or 12, the DMRS channel estimation is inaccurate. This affects PUSCH demodulation performance and decreases an uplink capacity.

With the development of mobile communication and the emergence of new services, a demand for an uplink capacity is increasing. For example, in some video surveillance scenarios, terminals need to backhaul high-definition videos to base stations. Therefore, a large uplink capacity is needed.

### SUMMARY

This application provides a communication method and an apparatus, to provide a demodulation reference signal that supports more orthogonal ports, to support multi-user pairing at a higher layer quantity.

The invention and its scope of protection is defined by the appended claims.

### BRIEF DESCRIPTION OF DRAWINGS

FIG. 1 is a schematic diagram of an architecture of a communication system applicable to this application;
FIG. 2 is a schematic diagram of a resource according to an embodiment of this application;
FIG. 3 is a schematic flowchart of a communication method according to an embodiment of this application;
FIG. 4 is a schematic diagram of a resource according to an embodiment of this application;
FIG. 5 is a schematic diagram of a resource according to an embodiment of this application;
FIG. 6 is a schematic diagram of a resource according to an embodiment of this application;
FIG. 7 is a schematic diagram of a structure of a communication apparatus according to an embodiment of this application; and
FIG. 8 is a schematic diagram of a structure of a communication apparatus according to an embodiment of this application.

### DESCRIPTION OF EMBODIMENTS

The following describes embodiments of this application in detail with reference to the accompanying drawings of this specification.

Embodiments of this application may be applied to various mobile communication systems, for example, a new radio (new radio, NR) system, a long term evolution (long term evolution, LTE) system, an evolved long term evolution (evolved long term evolution, eLTE) system, a future communication system, and other communication systems. Specifically, this is not limited herein.

In the descriptions of this application, terms such as "first" and "second" are only for distinction and description, but cannot be understood as indicating or implying relative importance, or as indicating or implying an order.

It should be understood that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally represents an "or" relationship between associated objects. "At least one of the following pieces (items)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

To describe technical solutions in embodiments of this application more clearly, the following describes the DMRS configuration method and an apparatus in embodiments of this application in detail with reference to the accompanying drawings.

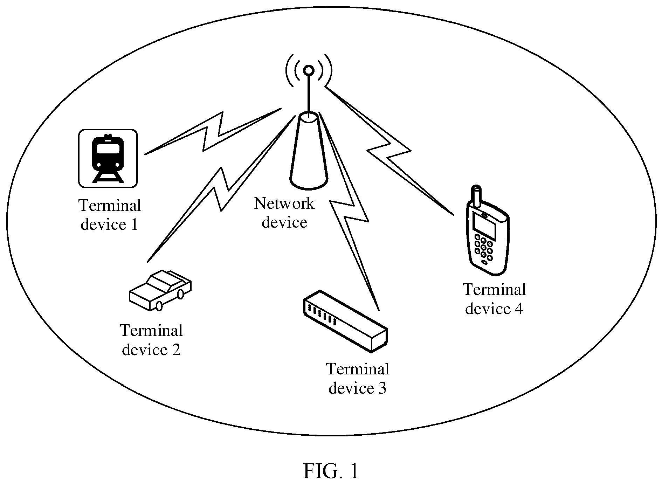

FIG. 1 shows an architecture of a communication system applicable to this application. The architecture of the communication system may include a network device and a terminal device. Details are as follows:
The network device is configured to receive an uplink signal from the terminal device, or send a downlink signal to the terminal device. The network device may be a long term evolution (long term evolution, LTE) network device and/or an NR network device, and may be specifically a NodeB (NodeB), an evolved NodeB (eNodeB), a base station in a 5G mobile communication system, a next generation mobile communication NodeB (next generation NodeB, gNB), a base station in a future mobile communication system, an access node in a Wi-Fi system, or the like. Alternatively, the network device may be a network node forming a gNB or a transmission point, for example, a baseband unit (BBU) or a distributed unit (distributed unit, DU).

In some deployments, the gNB may include a central unit (central unit, CU) and the DU. The gNB may further include a radio frequency unit (radio unit, RU). The CU implements a part of functions of the gNB, and the DU implements a part of the functions of the gNB. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical layer (physical layer, PHY). Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, a CU may be classified into a network device in a radio access network (radio access network, RAN), or the CU may be classified into a network device in a core network CN. This is not limited in this application.

The terminal device may also be referred to as user equipment (user equipment, UE), a mobile station (mobile station, MS), a mobile terminal (mobile terminal, MT), or the like. The terminal device is an entity that is on a user side and that is configured to transmit or receive a signal, and is configured to send an uplink signal to the network device, or receive a downlink signal from the network device. The terminal device may include a mobile phone, a vehicle, a tablet computer, and sensors such as a smart speaker, a train detector, and a gas station. Main functions of the terminal device include collecting data (some terminal devices), receiving control information and downlink data of a network device, sending an electromagnetic wave, and transmitting uplink data to the network device.

It should be understood that the communication system may include one or more network devices and one or more terminal devices. In FIG. 1, only one network device and four terminal devices (for example, a terminal device 1, a terminal device 2, a terminal device 3, and a terminal device 4 in FIG. 1) are used as examples, but quantities of network devices and terminal devices in the communication system cannot be limited.

It should be noted that the architecture of the communication system shown in FIG. 1 is not limited to including only nodes or the devices shown in the figure, and may further include another device not shown in the figure. Details are not described herein in this application one by one.

It should be noted that a distribution form of the nodes or the devices is not limited in embodiments of this application. The distribution form shown in FIG. 1 is merely an example, and is not limited in this application.

It should be understood that names of all nodes or devices in this application are merely examples, and may also be referred to as other names in future communication. Alternatively, in future communication, the nodes or devices in this application may be replaced with other entities, devices, or the like that have a same function. This is not limited in this application. Unified descriptions are provided herein, and details are not described below again.

It should be noted that the communication system shown in FIG. 1 may be a 4G or 5G mobile communication system. Similarly, the method in embodiments of this application is further applicable to various future communication systems, for example, 6G or another communication network. Provided that an entity in a communication system needs to send downlink data and pilot information, and another entity needs to receive the indication information, and can transmit data via uplink feedback information, in other words, provided that there are downlink and uplink communication links in the communication system, such a communication system may be applied to this application.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that: With evolution of the network architecture and emergence of a new service scenario, the technical solutions provided in embodiments of this application are also applicable to similar technical problems.

Currently, in a conventional technology, a ZC (Zadoff-Chu) sequence or a gold sequence may be used to generate a DMRS sequence. Detailed descriptions are provided below.

An initial DMRS sequence r(n) generated based on the gold sequence may satisfy the following formula: $r \left(n\right) = \frac{1}{\sqrt{2}} \left(1-2⋅c\left(2n\right)\right) + j \frac{1}{\sqrt{2}} \left(1-2⋅c\left(2n+1\right)\right)$ (1)

*c*(*i*) is a pseudo-random sequence, and a generation formula is: $\begin{matrix}c \left(n\right) = \left({x}_{1}\left(n+{N}_{C}\right)+{x}_{2}\left(n+{N}_{C}\right)\right) mod 2 \\ {x}_{1} \left(n+31\right) = \left({x}_{1}\left(n+3\right)+{x}_{1}\left(n\right)\right) mod 2 \\ {x}_{2} \left(n+31\right) = \left({x}_{2}\left(n+3\right)+{x}_{2}\left(n+2\right)+{x}_{2}\left(n+1\right)+{x}_{2}\left(n\right)\right) mod 2\end{matrix}$ (2)

*N*_{C} = 1600, *x*₁(*n*) may be initialized to *x*₁(0) = 1, *x*₁(*n*) = 0, *n* = 1, 2,..., 30 , and *x*₂(*n*) satisfies: ${c}_{init} = {\sum }_{i = 0}^{30} {x}_{2} \left(i\right) ⋅ {2}^{i}$. *c*ᵢₙᵢₜ is defined in the following form: ${c}_{init} = \left({2}^{17}\left({N}_{symb}^{slot}{n}_{s , f}^{μ}+l+1\right)\left(2{N}_{ID}^{{n}_{SCID}}+1\right)+2{N}_{ID}^{{n}_{SCID}}+{n}_{SCID}\right) mod {2}^{31}$ (3)

*l* is an orthogonal frequency division multiplexing (orthogonal frequency division multiplexing, OFDM) symbol index, ${n}_{s , f}^{μ}$ is a quantity of slots in a frame, ${N}_{symb}^{slot}$ is a quantity of OFDM symbols in a slot, n_{SCID} ∈ {0,1} is a DMRS sequence initialization parameter, and ${N}_{ID}^{{n}_{SCID}}$ is a mask. A value of ${N}_{ID}^{{n}_{SCID}}$ depends on configuration of different higher layer parameters.

It should be noted that, in embodiments of this application, an OFDM symbol may also be referred to as a symbol for short. Unless otherwise specified, a symbol in the following is an OFDM symbol.

When the sequence r(*n*) is mapped to each resource element (resource element, RE), the following formula is met (or refer to Section 6.4.1.1.3 in TS 38.211): $\begin{matrix}{{a}^{˜}}_{k , l}^{\left({{p}^{˜}}_{j}, μ\right)} = {w}_{f} \left(k′\right) {w}_{t} \left(l′\right) r \left(2n+k′\right) \\ k = \left\{\begin{matrix}4 n + 2 k ′ + Δ \\ 6 n + k ′ + Δ\end{matrix} \begin{matrix}Configuration type I \\ Configuration type II\end{matrix}\right. \\ k ′ = 0 , 1 \\ l = \overline{l} + l ′ \\ n = 0 , 1 , … \\ j = 0 , 1 , … , υ - 1\end{matrix}$ (4)

k is a subcarrier (equivalent to an RE) index, *l* is an OFDM symbol index, *p̃ⱼ* is a DMRS port index, r(n) is an initial sequence corresponding to a first DMRS, *_{l̅}* is an OFDM symbol offset, w*_{f}*(*k*') represents frequency domain OCC, w*ₜ*(*l'*) represents time domain OCC, and µ represents a subcarrier spacing index, where a value of the subcarrier spacing may be represented as 15×2^{µ} kHz. For example, if µ=0, the subcarrier spacing is 15 kHz.

For specific values of *w*_{f}(*k'*), *w*ₜ(*l*') , and Δ, refer to the following Table 1, or refer to Section 6.4.1.1.3 in TS 38.211.

**Table 1**

| *p̃* | CDM group (group) λ | Δ | w*_{f}*(*k'*) | | *wₜ*(*l'*) | |
|---|---|---|---|---|---|---|
| | | | *k'*=0 | *k'*=1 | *l'*=0 | *l'*=1 |
| 0 | 0 | 0 | +1 | +1 | +1 | +1 |
| 1 | 0 | 0 | +1 | -1 | +1 | +1 |
| 2 | 1 | 2 | +1 | +1 | +1 | +1 |
| 3 | 1 | 2 | +1 | -1 | +1 | +1 |
| 4 | 2 | 4 | +1 | +1 | +1 | +1 |
| 5 | 2 | 4 | +1 | -1 | +1 | +1 |
| 6 | 0 | 0 | +1 | +1 | +1 | -1 |
| 7 | 0 | 0 | +1 | -1 | +1 | -1 |
| 8 | 1 | 2 | +1 | +1 | +1 | -1 |
| 9 | 1 | 2 | +1 | -1 | +1 | -1 |
| 10 | 2 | 4 | +1 | +1 | +1 | -1 |
| 11 | 2 | 4 | +1 | -1 | +1 | -1 |

In Table 1, *p̃* represents a DMRS port number for sending a DMRS; and values of λ and Δ are associated with a code division multiplexing (code division multiplexing, CDM) group.

In a current standard, each CDM group supports a maximum of four DMRS ports, DMRSs sent by the four DMRS ports are distinguished by using orthogonal cover code (Orthogonal cover code, OCC) code that is orthogonal to each other, and a total of 12 DMRS ports that are orthogonal to each other are supported by three CDM groups. Currently, each CDM group corresponds to two groups of REs in one resource block (resource block, RB). In other words, a DMRS corresponding to the CDM group is repeatedly transmitted once in one RB.

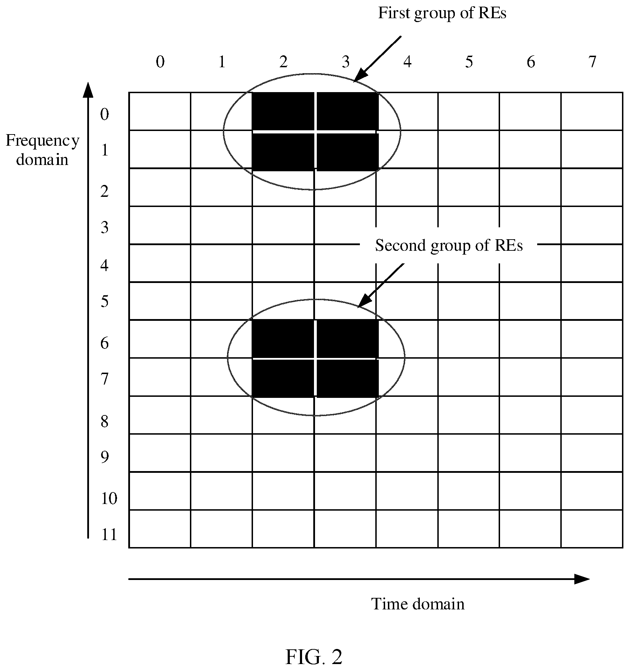

For example, as shown in FIG. 2, two groups of REs corresponding to one CDM group in one RB include four REs each. Subcarrier indexes occupied by a first group of REs in frequency domain are 0 and 1, and OFDM symbol indexes occupied in time domain are 2 and 3. When the CDM group includes four DMRS ports {0, 1, 6, 7}, OCC corresponding to the four REs included in the first group of REs is {1, 1, 1, 1}, {1, -1, 1, -1}, {1, 1, -1, -1}, and {1, -1, -1, 1}. Subcarrier indexes occupied by a second group of REs in frequency domain are 6 and 7, and OFDM symbol indexes occupied by the second group of REs in time domain are 2 and 3. It should be noted that the OCC corresponding to the four REs included in the first group of REs and OCC corresponding to the second group of REs are the same.

It should be noted that OCC corresponding to each DMRS port is determined based on *w*_{f}*(k')* and *w*ₜ(*l'*) that correspond to the DMRS port. For details, refer to descriptions in an existing standard. Details are not described herein again.

A DMRS sequence based on the ZC sequence in uplink transmission satisfies the following formula, or refer to TS 38.211: $\begin{matrix}r \left(n\right) = {r}_{u , ν}^{\left(α, δ\right)} \left(n\right) \\ n = 0 , 1 , … , {M}_{zc} - 1\end{matrix}$ (5)

n is each element index in the sequence, ${M}_{zc} = {mN}_{SC}^{RB} / {2}^{δ}$ is a total length of the sequence, *u* ∈ {0,1,...,29} is a sequence group index, v is a quantity of basic sequences in a sequence group, m is a quantity of RBs allocated by a base station to a terminal, and ${N}_{SC}^{RB}$ is a quantity of subcarriers included in an RB. For PUSCH transmission, *δ* =1 and *α* = 0 . In addition, ${r}_{u , v}^{\left(α, δ\right)} \left(n\right)$ is defined as: $\begin{matrix}{r}_{u , ν}^{\left(α, δ\right)} \left(n\right) = {e}^{jαn} {\overline{r}}_{u , ν} \left(n\right) , 0 \leq n < {M}_{ZC} \\ {\overline{r}}_{u , ν} \left(n\right) = {x}_{q} \left(n mod {N}_{ZC}\right) \\ {x}_{q} \left(m\right) = {e}^{- j \frac{πqm \left(m+1\right)}{{N}_{ZC}}}\end{matrix}$ (6) $\begin{matrix}q = \left⌊\overline{q}+1/2\right⌋ + ν ⋅ {\left(-1\right)}^{\left⌊2\overline{q}\right⌋} \\ \overline{q} = {N}_{ZC} ⋅ \left(u+1\right) / 31\end{matrix}$ (7)

A value of *N*_{ZC} is a maximum prime number less than *M*_{ZC} . For a sequence group index u, a value of the sequence group index u is: $u = \left({f}_{gh}+{n}_{ID}^{RS}\right) mod 30$ (8)

*f_{gh}* indicates whether to perform sequence frequency hopping, and a value of ${n}_{ID}^{RS}$ is limited to the following two cases.

Case 1: When a narrowband physical uplink control channel (narrow physical uplink control channel, nPUCCH)-identity parameter is configured at a higher layer, and uplink grant (grant) information is neither a random access response (random access response, RAR) grant nor downlink control information (Downlink Control Information, DCI) format 0_0 scrambled for a temporary cell-radio network temporary identifier (Temporary Cell-Radio Network Temporary Identifier, TC-RNTI), ${n}_{ID}^{RS} = {n}_{ID}^{PUSCH} ⋅ {n}_{ID}^{PUSCH}$ is configured based on the nPUSCH-identity parameter at the higher layer.

Case 2: ${n}_{ID}^{RS} = {N}_{ID}^{cell}$, to be specific, the scrambling code is the same as a cell identity (Identity, ID).

Because different cells and different terminals may be configured with different ${n}_{ID}^{PUSCH}$, sequences generated by the different cells are random to some extent.

After the sequence r(n) is generated, the sequence needs to be mapped, through OCC spread spectrum, to a time-frequency position corresponding to the DMRS. A mapping formula is (or refer to Section 6.4.1.1.3 in TS 38.211): $\begin{matrix}{{a}^{˜}}_{k , l}^{\left({{p}^{˜}}_{j}, μ\right)} = {w}_{f} \left(k′\right) {w}_{t} \left(l′\right) r \left(2n+k′\right) \\ k = 4 n + 2 k ′ + Δ \\ k ′ = 0 , 1 \\ l = \overline{l} + l ′ \\ n = 0 , 1 , …\end{matrix}$ (9)

k is a frequency domain subcarrier (equivalent to an RE) index, *l* is an OFDM symbol index, and *p̃*ⱼ is a DMRS port index.

A difference between the generation formula and the foregoing formula (4) lies in that the generation formula supports only a configuration type I DMRS, and does not support a configuration type II DMRS. For values of *w*_{f}(*k*') , *w*ₜ(*l*') , and Δ, refer to Table 2 below (or refer to Section 6.4.1.1.3 in TS 38.211).

**Table 2**

| *p̃* | CDM group λ | Δ | *w*_{f}(*k*') | | w*ₜ*(*l*') | |
|---|---|---|---|---|---|---|
| | | | *k'* =0 | *k'* =1 | *l'* =0 | *l'* =1 |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |

For meanings of various parameters in Table 2, refer to the descriptions in Table 1. Details are not described herein again.

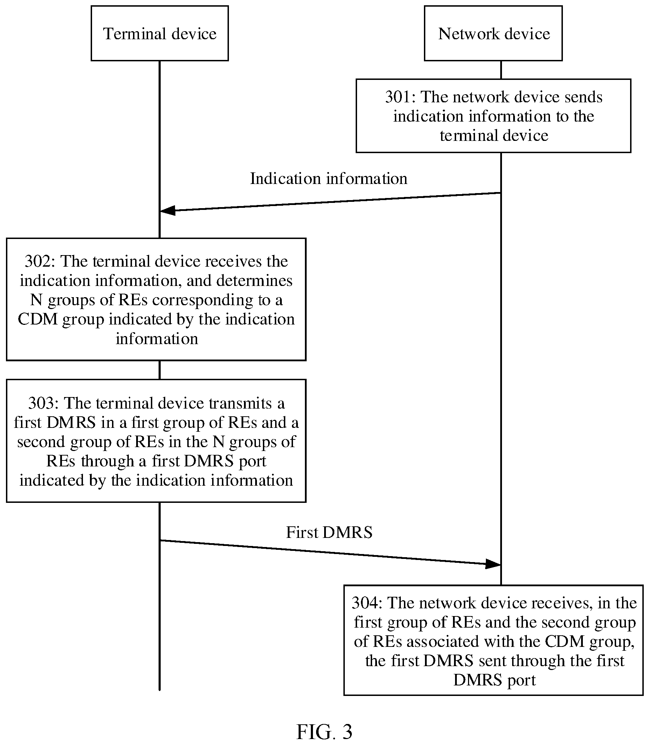

With reference to the foregoing descriptions, refer to FIG. 3. FIG. 3 is a schematic flowchart of a communication method according to an embodiment of this application. The method includes the following steps.

Step 301: A network device sends indication information to a terminal device.

The indication information indicates a first DMRS port and a CDM group in which the first DMRS port is located. It should be noted that before the terminal device sends a DMRS, the network device may configure, via the indication information, the DMRS port and the CDM group that are for sending the DMRS. The network device may configure at least one DMRS port for the terminal device via the indication information. In this embodiment of this application, the first DMRS port is used as an example for description, and this does not mean that the network device configures only one DMRS port.

It should be noted that the network device may send the indication information via DCI.

Step 302: The terminal device receives the indication information, and determines N groups of REs corresponding to the CDM group indicated by the indication information.

N is an integer greater than 1, and one group of REs includes at least one RE.

It should be noted that, currently, each CDM group has a plurality of corresponding groups of REs, and the correspondence is preconfigured.

Step 303: The terminal device transmits a first DMRS in a first group of REs and a second group of REs in the N groups of REs through the first DMRS port indicated by the indication information.

First OCC is used to transmit the first DMRS in the first group of REs through the first DMRS port, second OCC is used to transmit the first DMRS in the second group of REs, and the first OCC is different from the second OCC.

The first group of REs and the second group of REs satisfy any one of the following conditions:
located in a same resource block (resource block, RB);
located on a same subcarrier, and located in different symbols in a same slot; or
located in different RBs, and located in a same symbol in a same slot.

Step 304: The network device receives, in the first group of REs and the second group of REs associated with the CDM group, the first DMRS sent through the first DMRS port.

Further, the CDM group may further include a second DMRS port. Correspondingly, the network device may receive, in the first group of REs and the second group of REs, a second DMRS sent through the second DMRS port. The second DMRS port may be allocated to the terminal device, or may be allocated to another terminal device. This is not limited in this embodiment of this application.

The second DMRS port uses third OCC in the first group of REs, and uses fourth OCC in the second group of REs. First extended OCC corresponding to the first DMRS port is orthogonal to second extended OCC corresponding to the second DMRS port. The first extended OCC includes the first OCC and the second OCC, and the second extended OCC includes the third OCC and the fourth OCC.

In the foregoing procedure, the first OCC for transmitting the first DMRS in the first group of REs through the first DMRS port is different from the second OCC for transmitting the first DMRS in the second group of REs through the first DMRS port. Therefore, the network device can distinguish between, based on the first OCC and the second OCC, DMRSs transmitted in different groups of REs through the first DMRS port, to separately estimate channels corresponding to the different groups of REs. This is equivalent to a case in which DMRS overheads are not increased and a quantity of DMRS ports supported by each CDM group is increased, to increase an uplink channel capacity.

In this embodiment of this application, OCC extension may be performed in time domain or frequency domain, to support a DMRS sequence with more than 12 orthogonal DMRS ports, and improve an uplink capacity. The following separately provides descriptions.

### Embodiment 1

In Embodiment 1, orthogonality of 24 DMRS ports may be supported through OCC frequency domain extension, to implement 24 layers of orthogonal multi-user pairing.

In Embodiment 1, a CDM group may correspond to at least two groups of REs. Using the two groups of REs as an example, the two groups of REs are respectively a first group of REs and a second group of REs. The first group of REs and the second group of REs may be located in a same RB, and located in a same symbol in a same slot.

For example, the first group of REs includes four REs, and the first group of REs occupies two consecutive subcarriers in frequency domain and two consecutive OFDM symbols in time domain. The second group of REs includes four REs, and the second group of REs occupies two consecutive subcarriers in frequency domain and two consecutive OFDM symbols in time domain.

The two consecutive subcarriers occupied by the first group of REs and the two consecutive subcarriers occupied by the second group of REs are different subcarriers. The two consecutive OFDM symbols occupied by the first group of REs and the two consecutive OFDM symbols occupied by the second group of REs are the same OFDM symbols.

For example, subcarrier indexes occupied by the first group of REs in frequency domain are 0 and 1, subcarrier indexes occupied by the second group of REs in frequency domain are 6 and 7, and OFDM symbol indexes occupied by the first group of REs and the second group of REs in time domain are 2 and 3.

Alternatively, subcarrier indexes occupied by the first group of REs in frequency domain are 2 and 3, subcarrier indexes occupied by the second group of REs in frequency domain are 8 and 9, and OFDM symbol indexes occupied by the first group of REs and the second group of REs in time domain are 6 and 7.

Alternatively, subcarrier indexes occupied by the first group of REs in frequency domain are 4 and 5, subcarrier indexes occupied by the second group of REs in frequency domain are 10 and 11, and OFDM symbol indexes occupied by the first group of REs and the second group of REs in time domain are 10 and 11.

With reference to the procedure in FIG. 3, the first DMRS that is transmitted through the first DMRS port and that is weighted by using the first OCC or the second OCC satisfies the following formula: $\begin{matrix}{{α}^{˜}}_{k , l}^{\left({{p}^{˜}}_{j}, μ\right)} = {w}_{f} \left(k′+2t\right) {w}_{t} \left(l′\right) r \left(2n+k′\right) \\ k = 6 n + k ′ + Δ Configuration type II \\ k ′ = 0 , 1 \\ t = mod \left(n, 2\right) \\ l = \overline{l} + l ′ \\ n = 0 , 1 , … \\ j = 0 , 1 , … , ν - 1\end{matrix}$ (10) ${{α}^{˜}}_{k , l}^{\left({{p}^{˜}}_{j}, μ\right)}$ represents a sequence corresponding to the first DMRS that is transmitted through the first DMRS port and that is weighted by using the first OCC or the second OCC; k is a subcarrier index; *l* is an OFDM symbol index; *p̃ⱼ* is a first DMRS port index; mod() is a modulo operation; r(n) is an initial sequence corresponding to the first DMRS; when t=0, w*_{f}*(*k'* + 2*t*) and w*ₜ*(*l'*) are used to determine the first OCC in the first group of REs; when t=1, w*_{f} (k'* + *2t)* and w*ₜ*(*l'*) are used to determine the second OCC in the second group of REs; Δ is a subcarrier offset, where a value of Δ is associated with a CDM group index; *l* is an OFDM symbol offset; µ is a subcarrier spacing index; w*_{f}*(*k' + 2t)* represents frequency domain OCC; w*ₜ*(*l'*) represents time domain OCC; and v is a layer index and is a preconfigured value. For details about how to generate r(n), refer to the foregoing formula (1). In the formula (10), t=0 corresponds to the first group of REs; and t=1 corresponds to the second group of REs. For definitions of other parameters in the formula (10), refer to descriptions in the formula (4).

Further, for values of w*_{f}*(*k'* + 2*t*) , w*ₜ*(*l'*) , and Δ, refer to Table 3-1.

**Table 3-1**

| *p̃* | CDM group *λ* | Δ | w*_{f}*(*k' + 2t)* | | | | w*ₜ*(*l'*) | |
|---|---|---|---|---|---|---|---|---|
| | | | *k'*=0 | *k'*=1 | *k'*=0 | *k'*=1 | *l'*=0 | *l'*=1 |
| | | | t=0 | t=0 | t=1 | t=1 | | |
| 0 | 0 | 0 | +1 | +1 | +1 | +1 | +1 | +1 |
| 1 | 0 | 0 | +1 | -1 | +1 | -1 | +1 | +1 |
| 2 | 1 | 2 | +1 | +1 | +1 | +1 | +1 | +1 |
| 3 | 1 | 2 | +1 | -1 | +1 | -1 | +1 | +1 |
| 4 | 2 | 4 | +1 | +1 | +1 | +1 | +1 | +1 |
| 5 | 2 | 4 | +1 | -1 | +1 | -1 | +1 | +1 |
| 6 | 0 | 0 | +1 | +1 | +1 | +1 | +1 | -1 |
| 7 | 0 | 0 | +1 | -1 | +1 | -1 | +1 | -1 |
| 8 | 1 | 2 | +1 | +1 | +1 | +1 | +1 | -1 |
| 9 | 1 | 2 | +1 | -1 | +1 | -1 | +1 | -1 |
| 10 | 2 | 4 | +1 | +1 | +1 | +1 | +1 | -1 |
| 11 | 2 | 4 | +1 | -1 | +1 | -1 | +1 | -1 |
| 12 | 0 | 0 | +1 | +1 | -1 | -1 | +1 | +1 |
| 13 | 0 | 0 | +1 | -1 | -1 | 1 | +1 | +1 |
| 14 | 1 | 2 | +1 | +1 | -1 | -1 | +1 | +1 |
| 15 | 1 | 2 | +1 | -1 | -1 | 1 | +1 | +1 |
| 16 | 2 | 4 | +1 | +1 | -1 | -1 | +1 | +1 |
| 17 | 2 | 4 | +1 | -1 | -1 | 1 | +1 | +1 |
| 18 | 0 | 0 | +1 | +1 | -1 | -1 | +1 | -1 |
| 19 | 0 | 0 | +1 | -1 | -1 | 1 | +1 | -1 |
| 20 | 1 | 2 | +1 | +1 | -1 | -1 | +1 | -1 |
| 21 | 1 | 2 | +1 | -1 | -1 | 1 | +1 | -1 |
| 22 | 2 | 4 | +1 | +1 | -1 | -1 | +1 | -1 |
| 23 | 2 | 4 | +1 | -1 | -1 | 1 | +1 | -1 |

In Table 3-1, *p̃* represents a DMRS port number that sends a DMRS, and λ represents a CDM group index.

It can be learned by comparing Table 3-1 with Table 1 that, in Table 3-1, in comparison with the original Table 1, a quantity of DMRS ports may be extended to 24. In addition, when DMRS port numbers are 0 to 11, values of w*_{f}*(*k'* + 2*t*), w*ₜ*(*l'*) , and Δ in Table 3 may be the same as those in Table 1. This embodiment of this application provides extended DMRS port numbers, namely, values of w*_{f}*(*k'* + 2*t*), w*ₜ*(*l*), and Δ corresponding to 12 to 23. When DMRSs are sent through DMRS ports whose DMRS port numbers are 12 to 23, corresponding OCC may be determined based on Table 3-1. It should be noted that, although the values of w*_{f}*(*k' +* 2*t*), w*ₜ*(*l'*), and Δ in rows 0 to 11 in Table 3-1 are also extended, the extended 3^{rd} column and the extended 4^{th} column are both the same as values of w*_{f}*(*k*'), w*ₜ*(*l'*), and Δ in Table 1. Therefore, OCC in rows 0 to 11 is not affected.

In another possible implementation, a table in the conventional technology is still used as an OCC table corresponding to DMRS ports 0 to 11, and a new OCC table is used for DMRS ports 12 to 23, as shown in Table 3-2:

**Table 3-2**

| *p̃* | CDM group λ | Δ | w*_{f}*(*k'* + *2t)* | | | | w*ₜ*(*l'*) | |
|---|---|---|---|---|---|---|---|---|
| | | | *k'*=0 | *k'*=1 | *k'*=0 | *k =1* | *l'*=0 | *l'*=1 |
| | | | t=0 | t=0 | t=1 | t=1 | | |
| 12 | 0 | 0 | +1 | +1 | -1 | -1 | +1 | +1 |
| 13 | 0 | 0 | +1 | -1 | -1 | 1 | +1 | +1 |
| 14 | 1 | 2 | +1 | +1 | -1 | -1 | +1 | +1 |
| 15 | 1 | 2 | +1 | -1 | -1 | 1 | +1 | +1 |
| 16 | 2 | 4 | +1 | +1 | -1 | -1 | +1 | +1 |
| 17 | 2 | 4 | +1 | -1 | -1 | 1 | +1 | +1 |
| 18 | 0 | 0 | +1 | +1 | -1 | -1 | +1 | -1 |
| 19 | 0 | 0 | +1 | -1 | -1 | 1 | +1 | -1 |
| 20 | 1 | 2 | +1 | +1 | -1 | -1 | +1 | -1 |
| 21 | 1 | 2 | +1 | -1 | -1 | 1 | +1 | -1 |
| 22 | 2 | 4 | +1 | +1 | -1 | -1 | +1 | -1 |
| 23 | 2 | 4 | +1 | -1 | -1 | 1 | +1 | -1 |

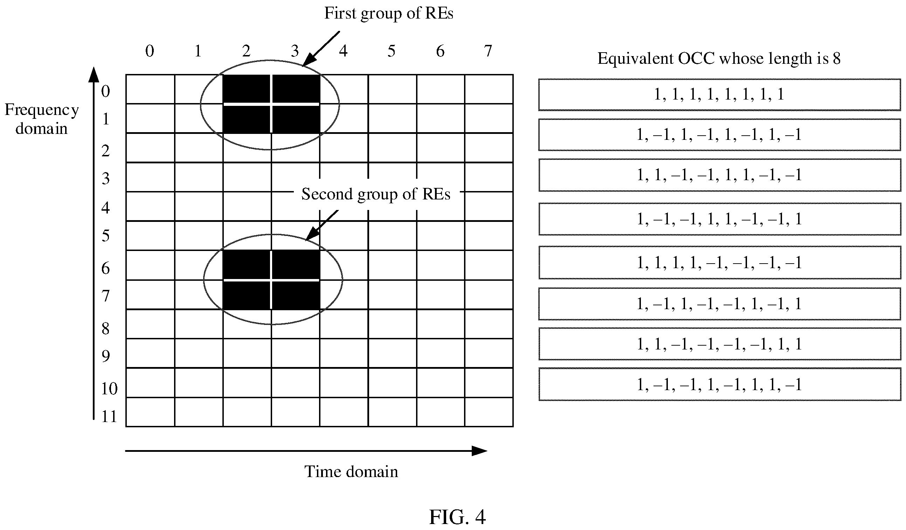

For example, as shown in FIG. 4, it is assumed that the CDM group index is 0, and the CDM group includes four DMRS ports: 0, 1, 6, and 7. Two groups of REs corresponding to the CDM group in one RB include four REs each. Subcarrier indexes occupied by a first group of REs in frequency domain are 0 and 1, and OFDM symbol indexes occupied in time domain are 2 and 3. Subcarrier indexes occupied by a second group of REs in frequency domain are 6 and 7, and OFDM symbol indexes occupied by the second group of REs in time domain are 2 and 3.

Based on the solution in the conventional technology and with reference to Table 1, it can be learned that OCC used by the four DMRS ports in the CDM group in the first group of REs is respectively {1, 1, 1, 1}, {1, -1, 1, -1}, {1, 1, -1, -1}, and {1, -1, -1, 1}. In the conventional technology, DMRSs need to be repeatedly sent in the second group of REs. Therefore, OCC used by the four DMRS ports in the CDM group in the second group of REs is the same as the OCC used in the first group of REs.

In this embodiment of this application, the first group of REs and the second group of REs may be combined. In this case, the OCC of the two groups of REs may be equivalent to OCC whose length is 8. Specifically, with reference to Table 3-1, it can be learned that in this embodiment of this application, OCC used by eight DMRS ports in the CDM group in the first group of REs is respectively {1, 1, 1, 1}, {1, -1, 1, -11, {1, 1, -1, -1}, {1, -1, -1, 1}, {1, 1, 1, 1}, {1, -1, 1, -1}, {1, 1, -1, -1}, and {1, -1, -1, 1}. OCC used by the eight DMRS ports in the CDM group in the second group of REs is respectively {-1, -1, -1, -1}, {-1, 1, -1, 1}, {-1, -1, 1, 1}, {-1, 1, 1, -1}, {-1, - 1, -1, -1}, {-1, 1, -1, 1}, {-1, -1, 1, 1}, and {-1, 1, 1, -1}.

In this case, equivalent OCC whose length is 8 and that is used by the eight DMRS ports in the CDM group is {1, 1, 1, 1, -1, -1, -1, -1}, {1, -1, 1, -1, -1, 1, -1, 1}, {1, 1, -1, -1, -1, -1, 1, 1}, {1, -1, -1, 1, -1, 1, 1, -1}, {1, 1, 1, 1, -1, -1, -1, -1}, {1, -1, 1, -1, -1, 1, -1, 1}, {1, 1, -1, -1, -1, -1, 1, 1}, and {1, -1, -1, 1, -1, 1, 1, -1}. A CDM group 0 is used as an example (namely, λ = 0). Equivalent OCC whose length is 8 and that corresponds to DMRS ports 12, 13, 18, and 19 is orthogonal to equivalent OCC whose length is 8 and that corresponds to DMRS ports 0, 1, 6, and 7. In this way, it can be ensured that sequences corresponding to different DMRS ports in a same CDM group are orthogonal to each other, to avoid interference between DMRS ports.

For example, assuming that the first OCC used by the first DMRS port in the CDM group in the first group of REs is {1, 1, 1, 1}, the second OCC used in the second group of REs may be {-1, -1, -1, -1}. Because the first OCC is different from the second OCC, a network device may distinguish between sequences sent by a terminal device in different groups of REs through the first DMRS port, and estimate a channel corresponding to the first DMRS port.

Further, assuming that third OCC used by a second DMRS port in the CDM group in the first group of REs is {1, -1, 1, -1}, fourth OCC used in the second group of REs may be {-1, 1, -1, 1}. First extended OCC formed by the first OCC and the second OCC is {1, 1, 1, 1, -1, -1, -1, -1}, and second extended OCC formed by the third OCC and the fourth OCC is {1, -1, 1, -1, -1, 1, -1, 1}. The two are orthogonal to each other. Therefore, the network device can distinguish between DMRSs sent through the first DMRS port and the second DMRS port. In other words, the network device can separately estimate channels corresponding to the first DMRS port and the second DMRS port.

It can be learned from comparison that, according to the method provided in this embodiment of this application, it may be understood that two times of OCC spread spectrum is performed in different frequency domain.

It can be learned from a mathematical operation that the OCC used in the first group of REs is orthogonal to the OCC used in the second group of REs. Because each row of OCC corresponds to one DMRS port, eight rows represent that there is OCC on eight DMRS ports, and OCC in every two rows is orthogonal. Therefore, in uplink transmission, the network device may separately estimate a channel corresponding to each DMRS port when different OCC is used. In other words, the terminal device may send data of different streams by using the first group of REs and the second group of REs, to increase an uplink capacity.

Further, that the network device may indicate the first DMRS port and a DMRS port group to the terminal device via the indication information is described above. In the conventional technology, a mapping relationship between parameters such as a DMRS port, a CDM group, and a quantity of OFDM symbols occupied by the CDM group is established, and the indication information sent by the network device may be an index value, to indicate the parameters such as a DMRS port, a CDM group, and a quantity of OFDM symbols occupied by the CDM group.

Specifically, when a rank (rank) that is of uplink transmission of the terminal device and that is configured by the network device is 1, only one DMRS port is needed when the terminal device sends uplink data. In other words, a quantity of DMRS ports configured by the network device is 1. The mapping relationship between the parameters such as a DMRS port and a CDM group that are configured by the network device, and a quantity of OFDM symbols occupied by the CDM group may be shown in Table 4.

**Table 4**

| Index value (value) | Quantity of DMRS CDM groups without data | DMRS port | Quantity of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28 | 3 | 12 | 2 |
| 29 | 3 | 13 | 2 |
| 30 | 3 | 14 | 2 |
| 31 | 3 | 15 | 2 |
| 32 | 3 | 16 | 2 |
| 33 | 3 | 17 | 2 |
| 34 | 3 | 18 | 2 |
| 35 | 3 | 19 | 2 |
| 36 | 3 | 20 | 2 |
| 37 | 3 | 21 | 2 |
| 38 | 3 | 22 | 2 |
| 39 | 3 | 23 | 2 |
| 41-63 | Reserved (Reserved) | Reserved | Reserved |

In Table 4, values obtained when index values are 0 to 27 are the same as those in Table 7.3.1.1.2-20 in TS 38.212 in the conventional technology. Values obtained when the index values are 28 to 39 are provided in this embodiment of this application. For example, when the indication information sent by the network device is 30, it indicates that a configured DMRS port number is 14, and a quantity of symbols occupied by a CDM group in which a DMRS port is located is 2. Further, it can be learned from Table 3-1 that λ of the CDM group in which the DMRS port is located is 2.

When a rank that is of uplink transmission of the terminal device and that is configured by the network device is 2, two DMRS ports are needed when the terminal device sends uplink data. In other words, a quantity of DMRS ports configured by the network device is 2. The mapping relationship between the parameters such as a DMRS port and a CDM group that are configured by the network device, and a quantity of OFDM symbols occupied by the CDM group may be shown in Table 5.

**Table 5**

| Index value (value) | Quantity of DMRS CDM groups without data | DMRS port | Quantity of front-load symbols |
|---|---|---|---|
| 0 | 1 | 0, 1 | 1 |
| 1 | 2 | 0, 1 | 1 |
| 2 | 2 | 2, 3 | 1 |
| 3 | 3 | 0, 1 | 1 |
| 4 | 3 | 2, 3 | 1 |
| 5 | 3 | 4, 5 | 1 |
| 6 | 2 | 0, 2 | 1 |
| 7 | 3 | 0, 1 | 2 |
| 8 | 3 | 2, 3 | 2 |
| 9 | 3 | 4, 5 | 2 |
| 10 | 3 | 6, 7 | 2 |
| 11 | 3 | 8, 9 | 2 |
| 12 | 3 | 10, 11 | 2 |
| 13 | 1 | 0, 1 | 2 |
| 14 | 1 | 6, 7 | 2 |
| 15 | 2 | 0, 1 | 2 |
| 16 | 2 | 2, 3 | 2 |
| 17 | 2 | 6, 7 | 2 |
| 18 | 2 | 8, 9 | 2 |
| 19 | 3 | 12, 13 | 2 |
| 20 | 3 | 14, 15 | 2 |
| 21 | 3 | 16, 17 | 2 |
| 22 | 3 | 18, 29 | 2 |
| 23 | 3 | 20, 21 | 2 |
| 24 | 3 | 22, 23 | 2 |
| 25-31 | Reserved (Reserved) | Reserved | Reserved |

In Table 5, values obtained when index values are 0 to 18 are the same as those in Table 7.3.1.1.2-21 in TS 38.212 in the conventional technology. Values obtained when the index values are 19 to 24 are provided in this embodiment of this application. For example, when the indication information sent by the network device is 24, it indicates that configured DMRS port numbers are 22 and 23. Further, it can be learned from Table 3-1 that λ of a CDM group in which DMRS ports whose port numbers are 22 and 23 are located is 4.

When a rank that is of uplink transmission of the terminal device and that is configured by the network device is 3, three DMRS ports are needed when the terminal device sends uplink data. In other words, a quantity of DMRS ports configured by the network device is 3. The mapping relationship between the parameters such as a DMRS port and a CDM group that are configured by the network device, and a quantity of OFDM symbols occupied by the CDM group may be shown in Table 6.

**Table 6**

| Index value (value) | Quantity of DMRS CDM groups without data | DMRS port | Quantity of front-load symbols |
|---|---|---|---|
| 0 | 2 | 0-2 | 1 |
| 1 | 3 | 0-2 | 1 |
| 2 | 3 | 3-5 | 1 |
| 3 | 3 | 0, 1, 6 | 2 |
| 4 | 3 | 2,3,8 | 2 |
| 5 | 3 | 4, 5, 10 | 2 |
| 6 | 3 | 12, 13, 18 | 2 |
| 7 | 3 | 14, 15, 20 | 2 |
| 8 | 3 | 16, 17, 22 | 2 |
| 9 | 3 | 19, 21, 23 | 2 |
| 10-31 | Reserved (Reserved) | Reserved | Reserved |

In Table 6, values obtained when index values are 0 to 5 are the same as those in Table 7.3.1.1.2-22 in TS 38.212 in the conventional technology. Values obtained when the index values are 6 to 9 are provided in this embodiment of this application. For example, when the indication information sent by the network device is 9, it indicates that configured DMRS port numbers are 19, 22 and 23.

When a rank that is of uplink transmission of the terminal device and that is configured by the network device is 4, four DMRS ports are needed when the terminal device sends uplink data. In other words, a quantity of DMRS ports configured by the network device is 4. The mapping relationship between the parameters such as a DMRS port and a CDM group that are configured by the network device, and a quantity of OFDM symbols occupied by the CDM group may be shown in Table 7.

**Table 7**

| Index value (value) | Quantity of DMRS CDM groups without data | DMRS port | Quantity of front-load symbols |
|---|---|---|---|
| 0 | 2 | 0-3 | 1 |
| 1 | 3 | 0-3 | 1 |
| 2 | 3 | 0, 1, 6, 7 | 2 |
| 3 | 3 | 2,3,8,9 | 2 |
| 4 | 3 | 4, 5, 10, 11 | 2 |
| 5 | 3 | 12, 13, 18, 19 | 2 |
| 6 | 3 | **14,** 15, 20, 21 | 2 |
| 7 | 3 | 16, 17, 22, 23 | 2 |
| 8-31 | Reserved (Reserved) | Reserved | Reserved |

In Table 7, values obtained when index values are 0 to 4 are the same as those in Table 7.3.1.1.2-23 in TS 38.212 in the conventional technology. Values obtained when the index values are 5 to 7 are provided in this embodiment of this application. For example, when the indication information sent by the network device is 7, it indicates that configured DMRS port numbers are 16, 17, 22 and 23.

### Embodiment 2

In Embodiment 2, orthogonality of 24 DMRS ports may be supported through OCC time domain extension, to implement 24 layers of orthogonal multi-user pairing.

In Embodiment 2, a first group of REs and a second group of REs corresponding to a CDM group may be located on a same subcarrier, and located in different symbols in a same slot.

For example, the first group of REs includes four REs, and the first group of REs occupies two consecutive subcarriers in frequency domain and two consecutive OFDM symbols in time domain. The second group of REs includes four REs, and the second group of REs occupies two consecutive subcarriers in frequency domain and two consecutive OFDM symbols in time domain.

The two consecutive subcarriers occupied by the first group of REs and the two consecutive subcarriers occupied by the second group of REs are the same subcarriers; and the two consecutive OFDM symbols occupied by the first group of REs and the two consecutive OFDM symbols occupied by the second group of REs are different OFDM symbols.

For example, subcarrier indexes occupied by the first group of REs in frequency domain are 0 and 1, and OFDM symbol indexes occupied by the first group of REs in time domain are 2 and 3. Subcarrier indexes occupied by the second group of REs in frequency domain are 0 and 1, and OFDM symbol indexes occupied by the second group of REs in time domain are 8 and 9.

Alternatively, subcarrier indexes occupied by the first group of REs in frequency domain are 2 and 3, and OFDM symbol indexes occupied by the first group of REs in time domain are 2 and 3. Subcarrier indexes occupied by the second group of REs in frequency domain are 2 and 3, and OFDM symbol indexes occupied by the second group of REs in time domain are 8 and 9.

Alternatively, subcarrier indexes occupied by the first group of REs in frequency domain are 4 and 5, and OFDM symbol indexes occupied by the first group of REs in time domain are 2 and 3. Subcarrier indexes occupied by the second group of REs in frequency domain are 4 and 5, and OFDM symbol indexes occupied by the second group of REs in time domain are 8 and 9.

It should be noted that, in Embodiment 2, when a first DMRS is mapped to the first group of REs and the second group of REs through a first DMRS port, the foregoing formula (4) may be met.

Further, to implement time domain extension by using the OCC, 24 DMRS orthogonal ports may be supported, and 24 layers of orthogonal multi-user pairing is implemented. Based on Table 1, when a quantity of DMRS ports is greater than 12, when a sequence on an additional DMRS symbol is generated, values of *w*_{f}(*k*'), *w*ₜ(*l'*), and Δ are shown in Table 8.

**Table 8**

| *p̃* | CDM group λ | Δ | w*_{f}*(*k'*) | | w*ₜ*(*l*') | |
|---|---|---|---|---|---|---|
| | | | *k'*=0 | *k'*=1 | *l'*=0 | *l'*=1 |
| 12 | 0 | 0 | -1 | -1 | -1 | -1 |
| 13 | 0 | 0 | -1 | +1 | -1 | +1 |
| 14 | 1 | 2 | -1 | -1 | -1 | -1 |
| 15 | 1 | 2 | -1 | +1 | -1 | +1 |
| 16 | 2 | 4 | -1 | -1 | -1 | -1 |
| 17 | 2 | 4 | -1 | +1 | -1 | +1 |
| 18 | 0 | 0 | -1 | -1 | -1 | +1 |
| 19 | 0 | 0 | -1 | +1 | -1 | +1 |
| 20 | 1 | 2 | -1 | -1 | +1 | +1 |
| 21 | 1 | 2 | -1 | +1 | +1 | -1 |
| 22 | 2 | 4 | -1 | -1 | +1 | +1 |
| 23 | 2 | 4 | -1 | +1 | +1 | -1 |

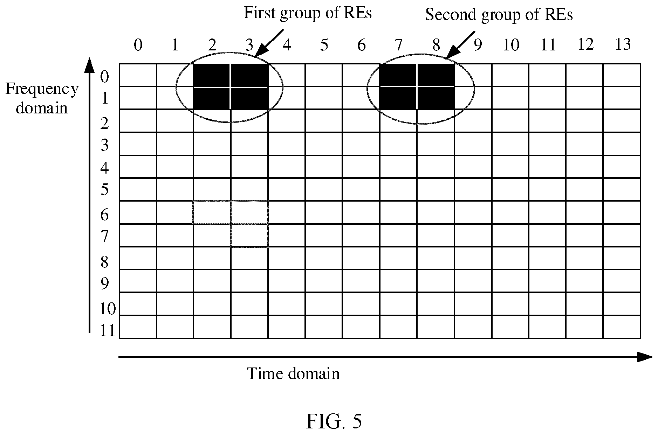

With reference to Table 8, it is assumed that a CDM group index is 0, and the CDM group includes four DMRS ports: 0, 1, 6, and 7. As shown in FIG.5, two groups of REs corresponding to the CDM group in one RB include four REs each. Subcarrier indexes occupied by a first group of REs in frequency domain are 0 and 1, and OFDM symbol indexes occupied in time domain are 2 and 3. Subcarrier indexes occupied by a second group of REs in frequency domain are 0 and 1, and OFDM symbol indexes occupied by the second group of REs in time domain are 8 and 9. Positions in which OFDM symbols whose indexes are 8 and 9 are located are symbol positions for configuring an additional (Additional) DMRS in an existing standard.

Based on the solution in the conventional technology and with reference to Table 1, it can be learned that OCC used by the four DMRS ports in the CDM group in the first group of REs is respectively {1, 1, 1, 1}, {1, -1, 1, -1}, {1, 1, -1, -1}, and {1, -1, -1, 1}. OCC used by the four DMRS ports in the CDM group in the second group of REs is the same as OCC used in the first group of REs.

In this embodiment of this application, the first group of REs and the second group of REs may be combined. In this case, the OCC of the two groups of REs may be equivalent to OCC whose length is 8. Specifically, assuming that the CDM group includes eight DMRS ports, OCC used by the eight DMRS ports in the CDM group in the first group of REs is respectively {1, 1, 1, 1}, {1, -1, 1, -1}, {1, 1, -1, -1}, {1, -1, -1, 1}, {1, 1, 1, 1}, {1, -1, 1, -1}, {1, 1, -1, -1}, and {1, -1, -1, 1}. OCC used by the eight DMRS ports in the CDM group in the second group of REs is respectively {1, 1, 1, 1}, {1, -1, 1, -1}, {1, 1, -1, -1}, {1, -1, -1, 1}, {-1, -1, -1, -1}, {-1, 1, -1, 1}, {-1, -1, 1, 1}, and {-1, 1, 1, -1}.

In this case, equivalent OCC whose length is 8 and that is used by the eight DMRS ports in the CDM group is {1, 1, 1, 1, 1, 1, 1, 1}, {1, -1, 1, -1, 1, -1, 1, -11, {1, 1, -1, -1, 1, 1, -1, -1}, {1, -1, -1, 1, 1, -1, -1, 1}, {1, 1, 1, 1, -1, -1, -1, -1}, {1, -1, 1, -1, -1, 1, -1, 1}, {1, 1, -1, -1, -1, -1, 1, 1}, and {1, -1, -1, 1, -1, 1, 1, -1}. The eight OCC is orthogonal to each other. A CDM group 0 is used as an example (namely, λ = 0). Equivalent OCC whose length is 8 and that corresponds to DMRS ports 12, 13, 18, and 19 is orthogonal to equivalent OCC whose length is 8 and that corresponds to DMRS ports 0, 1, 6, and 7. In this way, it can be ensured that sequences corresponding to different DMRS ports in a same CDM group are orthogonal to each other, to avoid interference between DMRS ports.

With reference to the foregoing descriptions, assuming that first OCC used by the first DMRS port in the CDM group in the first group of REs is { 1, 1, 1, 1}, second OCC used in the second group of REs may be {-1, - 1, -1, -1}. Because the first OCC is different from the second OCC, a network device may distinguish between sequences sent by a terminal device in different groups of REs through the first DMRS port, and estimate a channel corresponding to the first DMRS port.

Further, assuming that third OCC used by a second DMRS port in the CDM group in the first group of REs is {1, -1, 1, -1}, fourth OCC used in the second group of REs may be {-1, 1, -1, 1}. First extended OCC formed by the first OCC and the second OCC is {1, 1, 1, 1, -1, -1, -1, -1}, and second extended OCC formed by the third OCC and the fourth OCC is {1, -1, 1, -1, -1, 1, -1, 1}. The two are orthogonal to each other. Therefore, the network device can distinguish between DMRSs sent through the first DMRS port and the second DMRS port. In other words, the network device can separately estimate channels corresponding to the first DMRS port and the second DMRS port.

It can be learned from a mathematical operation that the OCC used in the first group of REs is orthogonal to the OCC used in the second group of REs. In other words, the terminal device may send data of different streams in the first group of REs and the second group of REs through a same DMRS port or different DMRS ports, to improve an uplink capacity.

Further, it can be learned from comparison that, in the method provided in this embodiment of this application, it may be understood that two times of OCC spread spectrum is performed in different time domain. When the DMRS is configured as two OFDM symbols, four times of OCC spread spectrum is performed in each CDM group.

Further, in Embodiment 2, for an index value indicated by the indication information sent by the network device, refer to Table 4 to Table 7 in Embodiment 1. A specific process is not described again.

In the foregoing Embodiment 2, without affecting an existing standard terminal, OCC is extended in time domain by using a slow-varying characteristic of a time domain channel, to support orthogonality of 24 DMRS ports and improve an uplink capacity.

### Embodiment 3

In Embodiment 3, that frequency domain OCC of a frequency domain DMRS is designed based on a cyclic shift of OCC is mainly described, to support orthogonality of 24 DMRS ports.

In Embodiment 3, a first group of REs and a second group of REs corresponding to a CDM group may be located in a same RB, and located in a same symbol in a same slot; or a first group of REs and a second group of REs corresponding to a CDM group may be located in different RBs, and located in a same symbol in a same slot.

For example, the first group of REs includes four REs, and the first group of REs occupies two consecutive subcarriers in frequency domain and two consecutive OFDM symbols in time domain. The second group of REs includes four REs, and the second group of REs occupies two consecutive subcarriers in frequency domain and two consecutive OFDM symbols in time domain.

The two consecutive subcarriers occupied by the first group of REs and the two consecutive subcarriers occupied by the second group of REs are subcarriers in a same RB. The two consecutive OFDM symbols occupied by the first group of REs and the two consecutive OFDM symbols occupied by the second group of REs are the same OFDM symbols.

For example, subcarrier indexes occupied by the first group of REs in a first RB in frequency domain are 1 and 3, 5 and 7, or 9 and 11; and subcarrier indexes occupied by the second group of REs in the first RB in frequency domain are 1 and 3, 5 and 7, or 9 and 11.

Further, in Embodiment 3, a first DMRS that is transmitted through a first DMRS port and that is weighted by using first OCC or second OCC satisfies the following formula: $\begin{matrix}{{α}^{˜}}_{k , l}^{\left({{p}^{˜}}_{j}, μ\right)} = {e}^{\frac{j 2 πmρ}{6 M}} ⋅ {w}_{f} \left(k′\right) {w}_{t} \left(l′\right) r \left(2n+k′\right) \\ k = 4 n + 2 k ′ + Δ Configuration type I \\ k ′ = 0 , 1 \\ m = mod \left(\left⌊k/2\right⌋,6M\right) \\ l = \overline{l} + l ′ \\ n = 0 , 1 , … \\ j = 0 , 1 , … , ν - 1\end{matrix}$ (11) ${{α}^{˜}}_{k , l}^{\left({{p}^{˜}}_{j}, μ\right)}$ represents a sequence corresponding to the first DMRS that is transmitted through the first DMRS port and that is weighted by using the first OCC or the second OCC; L J is a floor operation; mod() is a modulo operation; and r(n) is an initial sequence corresponding to the first DMRS, where r(n) may be determined by using the foregoing formula (1) or formula (5).

A value of M is a positive integer, and may be 1, 2, 4, or another positive integer. M may be configured by a network device by using signaling. If no signaling is used to configure the value of M, a default value is used. If the value of M is configured by using signaling, a configuration parameter in the signaling is used. The signaling may be RRC signaling, DCI signaling, or the like.

*ρ* is a cyclic shift factor, may be preconfigured, and is associated with a DMRS port index. For example, refer to Table 9 below. The cyclic shift factor P may alternatively be determined in another manner. This is not limited in this embodiment of this application. k is a subcarrier index, *l* is an OFDM symbol index, and *p̃ⱼ* is a first DMRS port index. A value of Δ is associated with a CDM group index; *l̅* is an OFDM symbol offset; µ is a subcarrier spacing index; w*_{f}*(*k'*) represents frequency domain OCC; w*ₜ*(*l'*) represents time domain OCC; and v is a layer index, and is a preconfigured value. For definitions of other parameters in formula (11), refer to descriptions in formula (9).

With reference to the formula (11), for details of values of *w*_{f}*(k'), w*ₜ (*l*'), and Δ, refer to Table 9.

**Table 9**

| *p̃* | CDM group *λ* | Δ | w*_{f}*(*k*') | | w*ₜ*(*l'*) | | *ρ* |
|---|---|---|---|---|---|---|---|
| | | | *k'*=0 | *k =1* | *k'*=0 | *k'*=1 | |
| 0 | 0 | 0 | +1 | +1 | +1 | +1 | N/A |
| 1 | 0 | 0 | +1 | -1 | +1 | +1 | N/A |
| 2 | 1 | 1 | +1 | +1 | +1 | +1 | N/A |
| 3 | 1 | 1 | +1 | -1 | +1 | +1 | N/A |
| 4 | 0 | 0 | +1 | +1 | +1 | -1 | N/A |
| 5 | 0 | 0 | +1 | -1 | +1 | -1 | N/A |
| 6 | 1 | 1 | +1 | +1 | +1 | -1 | N/A |
| 7 | 1 | 1 | +1 | -1 | +1 | -1 | N/A |
| 8 | 0 | 0 | +1 | +1 | +1 | +1 | 1 |
| 9 | 0 | 0 | +1 | +1 | +1 | +1 | 2 |
| 10 | 0 | 0 | +1 | +1 | +1 | +1 | 4 |
| 11 | 0 | 0 | +1 | +1 | +1 | +1 | 5 |
| 12 | 1 | 1 | +1 | +1 | +1 | +1 | 1 |
| 13 | 1 | 1 | +1 | +1 | +1 | +1 | 2 |
| 14 | 1 | 1 | +1 | +1 | +1 | +1 | 4 |
| 15 | 1 | 1 | +1 | +1 | +1 | +1 | 5 |
| 16 | 0 | 0 | +1 | +1 | +1 | -1 | 1 |
| 17 | 0 | 0 | +1 | +1 | +1 | -1 | 2 |
| 18 | 0 | 0 | +1 | +1 | +1 | -1 | 4 |
| 19 | 0 | 0 | +1 | +1 | +1 | -1 | 5 |
| 20 | 1 | 1 | +1 | +1 | +1 | -1 | 1 |
| 21 | 1 | 1 | +1 | +1 | +1 | -1 | 2 |
| 22 | 1 | 1 | +1 | +1 | +1 | -1 | 4 |
| 23 | 1 | 1 | +1 | +1 | +1 | -1 | 5 |

In Table 9, N/A indicates that there is no corresponding value. NA in Table 9 may alternatively be replaced with another value, for example, 0 or 3.

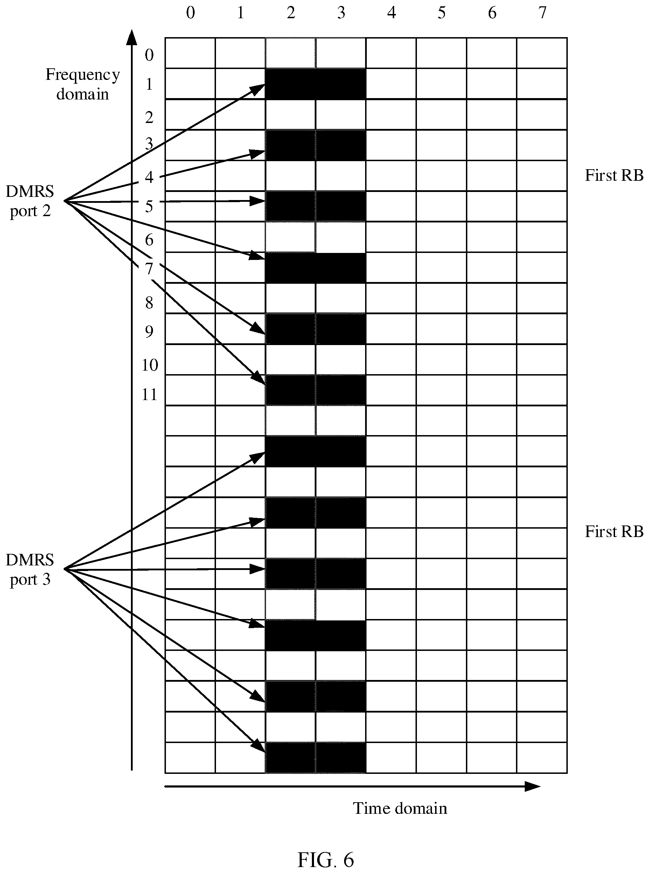

With reference to Table 9 and the foregoing formula (11), it is assumed that M=1, and the CDM group includes a DMRS port 2 and a DMRS port 3. As shown in FIG. 6, the DMRS port 2 occupies six REs whose subcarrier indexes are 1, 3, 5, 7, 9, and 11 respectively in a first RB in frequency domain, and OCC on the six REs is {+1, +1, +1, +1, +1, +1}. The DMRS port 3 occupies six REs whose subcarrier indexes are 1, 3, 5, 7, 9, and 11 respectively in the first RB in frequency domain, and OCC on the six REs is {+1, -1, +1, -1, +1, -1}. In FIG. 6, the REs occupied by the DMRS port 2 and the DMRS port 3 are actually the same REs. For better differentiation, in FIG. 6, the REs occupied by the DMRS port 2 and the DMRS port 3 are separately illustrated.

The sequence form may be further converted into an expression form of a cyclic shift, that is: $\left[1 -1 1 -1 1 -1\right] = \left[1 1 1 1 1 1\right] * {\left[{s}_{0},{s}_{1},…,{s}_{M - 1}\right]}^{T}$ (12)

M=1 is used as an example. In this case, ${s}_{m} = {e}^{\frac{j 2 πmρ}{6}}$ (*ρ* = 3 ), and m is a relative index of the RE, that is, m=0, 1, 2, 3, 4, and 5. Formula (12) is an expression of a cyclic shift. By using a feature of the foregoing formula, when *ρ* = 1, a sequence $\left[1,{e}^{j \frac{π}{3}}, {e}^{j \frac{2 π}{3}}, {e}^{j π}, {e}^{j \frac{4 π}{3}}, {e}^{j \frac{5 π}{3}}\right]$ may be constructed, and the sequence is orthogonal to sequences obtained when *ρ* = 0 and *ρ* = 3. Similarly, it may be learned that the foregoing sequence is also orthogonal to sequences obtained when *ρ =* 2 *, ρ* = 4 and *ρ* = 5 . Therefore, six orthogonal sequences may be constructed on one OFDM symbol. Sequences on two OFDM symbols are further extended, so that 12 orthogonal sequences may be constructed. With a sequence whose time domain OCC length is 2 in Table 9, 24 orthogonal sequences may be constructed, to support a schematic diagram of DMRS extension of 24 orthogonal DMRS ports.

With reference to FIG. 6, three groups of REs are included in FIG. 6. A first group of REs may be four REs whose subcarrier indexes are 1 and 3 in frequency domain and whose OFDM symbol indexes are 2 and 3 in time domain. A second group of REs may be four REs whose subcarrier indexes are 5 and 7 in frequency domain and whose OFDM symbol indexes are 2 and 3 in time domain. A third group of REs may be four REs whose subcarrier indexes are 9 and 11 in frequency domain and whose OFDM symbol indexes are 2 and 3 in time domain. It can be learned from the formula (12) that a DMRS port 2 or a DMRS port 3 may send a DMRS by using different OCC in the first group of REs, the second group of REs, and the third group of REs.

REs may be classified in another classification manner. For example, with reference to FIG. 6, the first group of REs may be six REs whose subcarrier indexes are 1, 3, 5, 7, 9, and 11 in frequency domain and whose OFDM symbol indexes are 2 in time domain. The second group of REs may be six REs whose subcarrier indexes are 1, 3, 5, 7, 9, and 11 in frequency domain and whose OFDM symbol indexes are 3 in time domain. It can be learned from the formula (12) that the DMRS port 2 or the DMRS port 3 may send the DMRS by using different OCC in the first group of REs and the second group of REs.

Further, that the network device may indicate the first DMRS port and a DMRS port group to a terminal device via indication information is described above. In the conventional technology, a mapping relationship between parameters such as a DMRS port, a CDM group, and a quantity of OFDM symbols occupied by the CDM group is established, and the indication information sent by the network device may be an index value, to indicate the parameters such as a DMRS port, a CDM group, and a quantity of OFDM symbols occupied by the CDM group.

Specifically, when a rank (rank) that is of uplink transmission of the terminal device and that is configured by the network device is 1, only one DMRS port is needed when the terminal device sends uplink data. In other words, a quantity of DMRS ports configured by the network device is 1. The mapping relationship between the parameters such as a DMRS port and a CDM group that are configured by the network device, and a quantity of OFDM symbols occupied by the CDM group may be shown in Table 10.

**Table 10**

| Index value (value) | Quantity of DMRS CDM groups without data | DMRS port | Quantity of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14 | 2 | 4 | 1 |
| 15 | 2 | 5 | 1 |
| 16 | 2 | 6 | 1 |
| 17 | 2 | 8 | 2 |
| 18 | 2 | 9 | 2 |
| 19 | 2 | 10 | 2 |
| 20 | 2 | 11 | 2 |
| 21 | 2 | 12 | 2 |
| 22 | 2 | 13 | 2 |
| 23 | 2 | 14 | 2 |
| 24 | 2 | 15 | 2 |
| 25 | 2 | 16 | 2 |
| 26 | 2 | 17 | 2 |
| 27 | 2 | 18 | 2 |
| 28 | 2 | 19 | 2 |
| 29 | 2 | 20 | 2 |
| 30 | 2 | 21 | 2 |
| 31 | 2 | 22 | 2 |
| 32 | 2 | 23 | 2 |

In Table 10, values obtained when index values are 0 to 13 are the same as those in Table 7.3.1.1.2-12 in TS 38.212 in the conventional technology. Values obtained when the index values are 14 to 32 are provided in this embodiment of this application. For example, when the indication information sent by the network device is 30, it indicates that a configured DMRS port number is 21.

When a rank that is of uplink transmission of the terminal device and that is configured by the network device is 2, two DMRS ports are needed when the terminal device sends uplink data. In other words, a quantity of DMRS ports configured by the network device is 2. The mapping relationship between the parameters such as a DMRS port and a CDM group that are configured by the network device, and a quantity of OFDM symbols occupied by the CDM group may be shown in Table 11.

**Table 11**

| Index value (value) | Quantity of DMRS CDM groups without data | DMRS port | Quantity of front-load symbols |
|---|---|---|---|
| 0 | 1 | 0, 1 | 1 |
| 1 | 2 | 0, 1 | 1 |
| 2 | 2 | 2, 3 | 1 |
| 3 | 2 | 0, 2 | 1 |
| 4 | 2 | 0, 1 | 2 |
| 5 | 2 | 2, 3 | 2 |
| 6 | 2 | 4, 5 | 2 |
| 7 | 2 | 6, 7 | 2 |
| 8 | 2 | 0, 4 | 2 |
| 9 | 2 | 2, 6 | 2 |
| 10 | 2 | 4, 5 | 1 |
| 11 | 2 | 8, 9 | 2 |
| 12 | 2 | 10, 11 | 2 |
| 13 | 2 | 12, 13 | 2 |
| 14 | 2 | 14, 15 | 2 |
| 15 | 2 | 16, 17 | 2 |
| 16 | 2 | 18, 19 | 2 |
| 17 | 2 | 20, 21 | 2 |
| 18 | 2 | 22, 23 | 2 |
| 25-31 | Reserved (Reserved) | Reserved | Reserved |

In Table 11, values obtained when index values are 0 to 9 are the same as those in Table 7.3.1.1.2-13 in TS 38.212 in the conventional technology. Values obtained when the index values are 10 to 18 are provided in this embodiment of this application. For example, when the indication information sent by the network device is 18, it indicates that configured DMRS port numbers are 22 and 23.

When a rank that is of uplink transmission of the terminal device and that is configured by the network device is 3, three DMRS ports are needed when the terminal device sends uplink data. In other words, a quantity of DMRS ports configured by the network device is 3. The mapping relationship between the parameters such as a DMRS port and a CDM group that are configured by the network device, and a quantity of OFDM symbols occupied by the CDM group may be shown in Table 12.

**Table 12**

| Index value (value) | Quantity of DMRS CDM groups without data | DMRS port | Quantity of front-load symbols |
|---|---|---|---|
| 0 | 2 | 0-2 | 1 |
| 1 | 2 | 0, 1, 4 | 2 |
| 2 | 2 | 2, 3, 6 | 2 |
| 3 | 2 | 3, 4, 5 | 1 |
| 4 | 2 | 8, 9, 12 | 2 |
| 5 | 2 | 10, 11, 14 | 2 |
| 6 | 2 | 11, 12, 13 | 2 |
| 7 | 2 | 16, 17, 20 | 2 |
| 8 | 2 | 18, 19, 22 | 2 |
| 9 | 2 | 19, 20, 23 | 2 |
| 10-31 | Reserved (Reserved) | Reserved | Reserved |

In Table 12, values obtained when index values are 0 to 2 are the same as those in Table 7.3.1.1.2 -14 in TS 38.212 in the conventional technology. Values obtained when the index values are 3 to 9 are provided in this embodiment of this application. For example, when the indication information sent by the network device is 9, it indicates that configured DMRS port numbers are 19, 20 and 23.

When a rank that is of uplink transmission of the terminal device and that is configured by the network device is 4, four DMRS ports are needed when the terminal device sends uplink data. In other words, a quantity of DMRS ports configured by the network device is 4. The mapping relationship between the parameters such as a DMRS port and a CDM group that are configured by the network device, and a quantity of OFDM symbols occupied by the CDM group may be shown in Table 13.

**Table 13**

| Index value (value) | Quantity of DMRS CDM groups without data | DMRS port | Quantity of front-load symbols |
|---|---|---|---|
| 0 | 2 | 0-3 | 1 |
| 1 | 2 | 0, 1, 4, 5 | 2 |
| 2 | 2 | 2, 3, 6, 7 | 2 |
| 3 | 2 | 0, 2, 4, 6 | 2 |
| 4 | 2 | 8, 9, 12, 13 | 2 |
| 5 | 2 | 10, 11, 14, 15 | 2 |
| 6 | 2 | 8, 10, 12, 14 | 2 |
| 7 | 2 | 16, 17, 20, 21 | 2 |
| 8 | 2 | 18, 19, 22, 23 | 2 |
| 9 | 2 | 16, 18, 20, 22 | 2 |
| 8-31 | Reserved (Reserved) | Reserved | Reserved |

In Table 13, values obtained when index values are 0 to 3 are the same as those in Table 7.3.1.1.2 -15 in TS 38.212 in the conventional technology. Values obtained when the index values are 4 to 9 are provided in this embodiment of this application. For example, when the indication information sent by the network device is 9, it indicates that configured DMRS port numbers are 16, 18, 20 and 23.

In Embodiment 3, DMRS port extension is performed by using a frequency domain cyclic shift, so that 24 DMRS orthogonal ports can be supported, and 24 layers of orthogonal multi-user pairing is implemented, to improve an uplink capacity. In addition, existing OCC is compatible, and the existing terminal device does not need to perform any hardware or software update.

Embodiments described in this specification may be independent solutions, or may be combined based on internal logic. All these solutions fall within the protection scope of this application. It may be understood that, in the foregoing method embodiments, the methods and the operations implemented by the terminal device may alternatively be implemented by a component (for example, a chip or a circuit) used in the terminal device, and the methods and the operations implemented by the network device may alternatively be implemented by a component (for example, a chip or a circuit) used in the network device.

In the foregoing embodiments provided in this application, the methods provided in embodiments of this application are separately described from a perspective of interaction between devices. To implement functions in the foregoing methods provided in embodiments of this application, the terminal device and the network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

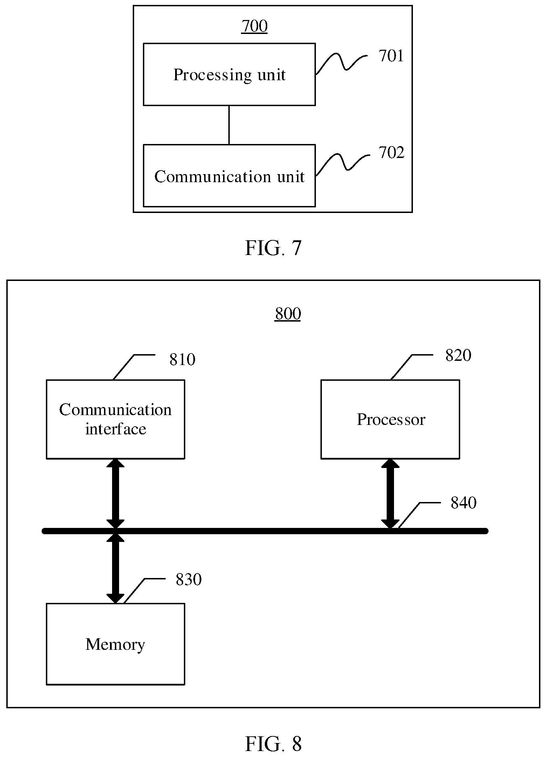

Same as the foregoing concept, as shown in FIG. 7, an embodiment of this application further provides an apparatus 700, configured to implement a function of the terminal device or the network device in the foregoing method. For example, the apparatus may be a software module or a chip system. In this embodiment of this application, the chip system may include a chip, or may include a chip and another discrete component. The apparatus 700 may include a processing unit 701 and a communication unit 702.

In this embodiment of this application, the communication unit may also be referred to as a transceiver unit, and may include a sending unit and/or a receiving unit, which are respectively configured to perform sending and receiving steps of the terminal device or the network device in the foregoing method embodiments.

The following describes in detail communication apparatuses provided in embodiments of this application with reference to FIG. 7 and FIG. 8. It should be understood that descriptions of apparatus embodiments correspond to the descriptions of the method embodiments. Therefore, for content that is not described in detail, refer to the foregoing method embodiments. For brevity, details are not described herein again.

In a possible design, the apparatus 700 may implement steps or procedures corresponding to the terminal device or the network device in the foregoing method embodiments. Descriptions are separately provided below.

For example, when the apparatus 700 implements the function of the network device in the procedure shown in FIG. 3,
a processing unit 701 is configured to send indication information to a terminal device by using the communication unit 702, where the indication information indicates a first demodulation reference signal DMRS port and a code division multiplexing CDM group in which the first DMRS port is located; and
the processing unit 701 is configured to receive, by using the communication unit 702 and in a first group of REs and a second group of REs associated with the CDM group, a first DMRS transmitted through the first DMRS port. First orthogonal cover code OCC for transmitting the first DMRS in the first group of REs through the first DMRS port is different from second OCC for transmitting the first DMRS in the second group of REs. The first group of REs and the second group of REs satisfy any one of the following conditions: located in a same resource block RB; located on a same subcarrier, and located in different symbols in a same slot; or located in different resource blocks RBs, and located in a same symbol in a same slot.

In a possible design, the CDM group further includes a second DMRS port. The method further includes: The network device receives, in the first group of REs and the second group of REs, a second DMRS sent through the second DMRS port. The second DMRS port uses third OCC in the first group of REs, and uses fourth OCC in the second group of REs. First extended OCC corresponding to the first DMRS port is orthogonal to second extended OCC corresponding to the second DMRS port. The first extended OCC includes the first OCC and the second OCC, and the second extended OCC includes the third OCC and the fourth OCC.

In a possible design, the first DMRS that is transmitted through the first DMRS port and that is weighted by using the first OCC or the second OCC satisfies the following formula: $\begin{matrix}{{α}^{˜}}_{k , l}^{\left({{p}^{˜}}_{j}, μ\right)} = {w}_{f} \left(k′+2t\right) {w}_{t} \left(l′\right) r \left(2n+k′\right) \\ k = 6 n + k ′ + Δ Configuration type II \\ k ′ = 0 , 1 \\ t = mod \left(n, 2\right) \\ l = \overline{l} + l ′ \\ n = 0 , 1 , … \\ j = 0 , 1 , … , ν - 1\end{matrix}$${{α}^{˜}}_{k , l}^{\left({{p}^{˜}}_{j}, μ\right)}$ represents a sequence corresponding to the first DMRS that is transmitted through the first DMRS port and that is weighted by using the first OCC or the second OCC; k is a subcarrier index; *l* is an OFDM symbol index; *p̃ⱼ* is a first DMRS port index; mod() is a modulo operation; r(n) is an initial sequence corresponding to the first DMRS; when t=0, w*_{f} (k' + 2t)* and w*ₜ* (*l'*) are used to determine the first OCC in the first group of REs; when t=1, w*_{f}*(*k'* + *2t)* and w*ₜ*(*l'*) are used to determine the second OCC in the second group of REs; Δ is a subcarrier offset, where a value of Δ is associated with a CDM group index; *l̅* is an OFDM symbol offset; µ is a subcarrier spacing index; w*_{f}* (*k'* + *2t)* represents frequency domain OCC; w*ₜ*(*l'*) represents time domain OCC; and v is a layer index.

In a possible design, the first DMRS that is transmitted through the first DMRS port and that is weighted by using the first OCC or the second OCC satisfies the following formula: $\begin{matrix}{{α}^{˜}}_{k , l}^{\left({{p}^{˜}}_{j}, μ\right)} = {e}^{\frac{j 2 πmρ}{6 M}} ⋅ {w}_{f} \left(k′\right) {w}_{t} \left(l′\right) r \left(2n+k′\right) \\ k = 4 n + 2 k ′ + Δ Configuration type I \\ k ′ = 0 , 1 \\ m = mod \left(\left⌊k/2\right⌋,6M\right) \\ l = \overline{l} + l ′ \\ n = 0 , 1 , … \\ j = 0 , 1 , … , ν - 1\end{matrix}$${{α}^{˜}}_{k , l}^{\left({{p}^{˜}}_{j}, μ\right)}$ represents a sequence corresponding to the first DMRS that is transmitted through the first DMRS port and that is weighted by using the first OCC or the second OCC; L J is a floor operation; mod() is a modulo operation; r(n) is an initial sequence corresponding to the first DMRS; P is a cyclic shift factor; a value of M is a positive integer; k is a subcarrier index; *l* is an OFDM symbol index; *p ᵢ* is a first DMRS port index; mod() is a modulo operation; r(n) is an initial sequence corresponding to the first DMRS; Δ is a subcarrier offset, where a value of Δ is associated with a CDM group index; *l̅* is an OFDM symbol offset; µ is a subcarrier spacing index; w*_{f}*(*k'*) represents frequency domain OCC; w*ₜ*(*l'*) represents time domain OCC; and v is a layer index.

In a possible design, P is preconfigured and is associated with the first DMRS port index, and M is configured by the network device or is a default value.

In a possible design, the first group of REs includes four REs, and the first group of REs occupies two consecutive subcarriers in frequency domain and two consecutive orthogonal frequency division multiplexing OFDM symbols in time domain. The second group of REs includes four REs, and the second group of REs occupies two consecutive subcarriers in frequency domain and two consecutive OFDM symbols in time domain. The two consecutive subcarriers occupied by the first group of REs and the two consecutive subcarriers occupied by the second group of REs are different subcarriers. The two consecutive OFDM symbols occupied by the first group of REs and the two consecutive OFDM symbols occupied by the second group of REs are the same OFDM symbols.

In a possible design, subcarrier indexes occupied by the first group of REs in frequency domain are 0 and 1, 2 and 3, or 4 and 5; and subcarrier indexes occupied by the second group of REs in frequency domain are 6 and 7, 8 and 9, or 10 and 11.

In a possible design, the first group of REs includes four REs, and the first group of REs occupies two consecutive subcarriers in frequency domain and two consecutive orthogonal frequency division multiplexing OFDM symbols in time domain. The second group of REs includes four REs, and the second group of REs occupies two consecutive subcarriers in frequency domain and two consecutive OFDM symbols in time domain. The two consecutive subcarriers occupied by the first group of REs and the two consecutive subcarriers occupied by the second group of REs are the same subcarriers. The two consecutive OFDM symbols occupied by the first group of REs and the two consecutive OFDM symbols occupied by the second group of REs are different OFDM symbols.

In a possible design, subcarrier indexes occupied by the first group of REs in frequency domain are 0 and 1, 2 and 3, or 4 and 5; and subcarrier indexes occupied by the second group of REs in frequency domain are 0 and 1, 2 and 3, or 4 and 5.

In a possible design, the first group of REs includes four REs, and the first group of REs occupies two inconsecutive subcarriers in frequency domain and two consecutive orthogonal frequency division multiplexing OFDM symbols in time domain. The second group of REs includes four REs, and the second group of REs occupies two inconsecutive subcarriers in frequency domain and two consecutive OFDM symbols in time domain. The two inconsecutive subcarriers occupied by the first group of REs and the two inconsecutive subcarriers occupied by the second group of REs are located in different RBs. The two consecutive OFDM symbols occupied by the first group of REs and the two consecutive OFDM symbols occupied by the second group of REs are the same OFDM symbols.

For example, when the apparatus 700 implements the function of the terminal device in the procedure shown in FIG. 3,
the communication unit 702 is configured to receive indication information, where the indication information indicates a first demodulation reference signal DMRS port and a code division multiplexing CDM group in which the first DMRS port is located;
the processing unit 701 is configured to determine N groups of resource elements REs corresponding to the CDM group indicated by the indication information, where N is an integer greater than 1; and
the communication unit 702 is configured to transmit a first DMRS in a first group of REs and a second group of REs in the N groups of REs through the first DMRS port indicated by the indication information.

First orthogonal cover code OCC is used to transmit the first DMRS in the first group of REs through the first DMRS port, second OCC is used to transmit the first DMRS in the second group of REs, and the first OCC is different from the second OCC.

The first group of REs and the second group of REs satisfy any one of the following conditions:
located in a same resource block RB;
located on a same subcarrier, and located in different symbols in a same slot; or
located in different resource blocks RBs, and located in a same symbol in a same slot.

In a possible design, the CDM group further includes a second DMRS port. The method further includes: The network device receives, in the first group of REs and the second group of REs, a second DMRS sent through the second DMRS port. The second DMRS port uses third OCC in the first group of REs, and uses fourth OCC in the second group of REs. First extended OCC corresponding to the first DMRS port is orthogonal to second extended OCC corresponding to the second DMRS port. The first extended OCC includes the first OCC and the second OCC, and the second extended OCC includes the third OCC and the fourth OCC.

In a possible design, the first DMRS that is transmitted through the first DMRS port and that is weighted by using the first OCC or the second OCC satisfies the following formula: $\begin{matrix}{{α}^{˜}}_{k , l}^{\left({{p}^{˜}}_{j}, μ\right)} = {w}_{f} \left(k′+2t\right) {w}_{t} \left(l′\right) r \left(2n+k′\right) \\ k = 6 n + k ′ + Δ Configuration type II \\ k ′ = 0 , 1 \\ t = mod \left(n, 2\right) \\ l = \overline{l} + l ′ \\ n = 0 , 1 , … \\ j = 0 , 1 , … , ν - 1\end{matrix}$${{α}^{˜}}_{k , l}^{\left({{p}^{˜}}_{j}, μ\right)}$ represents a sequence corresponding to the first DMRS that is transmitted through the first DMRS port and that is weighted by using the first OCC or the second OCC; k is a subcarrier index; *l* is an OFDM symbol index; *p̃ⱼ* is a first DMRS port index; mod() is a modulo operation; r(n) is an initial sequence corresponding to the first DMRS; when t=0, w*_{f} (k' + 2t)* and w*ₜ*(*l'*) are used to determine the first OCC in the first group of REs; when t=1, w*_{f}* (*k' + 2t)* and w*ₜ* (*l'*) are used to determine the second OCC in the second group of REs; A is a subcarrier offset, where a value of Δ is associated with a CDM group index; *l̅* is an OFDM symbol offset; µ is a subcarrier spacing index; w*_{f}* (*k' + 2t)* represents frequency domain OCC; w*ₜ*(*l'*) represents time domain OCC; and v is a layer index.

In a possible design, the first DMRS that is transmitted through the first DMRS port and that is weighted by using the first OCC or the second OCC satisfies the following formula: $\begin{matrix}{{α}^{˜}}_{k , l}^{\left({{p}^{˜}}_{j}, μ\right)} = {e}^{\frac{j 2 πmρ}{6 M}} ⋅ {w}_{f} \left(k′\right) {w}_{t} \left(l′\right) r \left(2n+k′\right) \\ k = 4 n + 2 k ′ + Δ Configuration type I \\ k ′ = 0 , 1 \\ m = mod \left(\left⌊k/2\right⌋,6M\right) \\ l = \overline{l} + l ′ \\ n = 0 , 1 , … \\ j = 0 , 1 , … , ν - 1\end{matrix}$${{α}^{˜}}_{k , l}^{\left({{p}^{˜}}_{j}, μ\right)}$ represents a sequence corresponding to the first DMRS that is transmitted through the first DMRS port and that is weighted by using the first OCC or the second OCC; L J is a floor operation; mod() is a modulo operation; r(n) is an initial sequence corresponding to the first DMRS; P is a cyclic shift factor; a value of M is a positive integer; k is a subcarrier index; *l* is an OFDM symbol index; *p̃ᵢ* is a first DMRS port index; mod() is a modulo operation; r(n) is an initial sequence corresponding to the first DMRS; Δ is a subcarrier offset, where a value of Δ is associated with a CDM group index; *l̅* is an OFDM symbol offset; µ is a subcarrier spacing index; w*_{f}*(*k'*) represents frequency domain OCC; w*ₜ*(*l'*) represents time domain OCC; and v is a layer index.

In a possible design, P is preconfigured and is associated with the first DMRS port index, and M is configured by the network device or is a default value.

In a possible design, the first group of REs includes four REs, and the first group of REs occupies two consecutive subcarriers in frequency domain and two consecutive orthogonal frequency division multiplexing OFDM symbols in time domain. The second group of REs includes four REs, and the second group of REs occupies two consecutive subcarriers in frequency domain and two consecutive OFDM symbols in time domain. The two consecutive subcarriers occupied by the first group of REs and the two consecutive subcarriers occupied by the second group of REs are different subcarriers. The two consecutive OFDM symbols occupied by the first group of REs and the two consecutive OFDM symbols occupied by the second group of REs are the same OFDM symbols.

In a possible design, subcarrier indexes occupied by the first group of REs in frequency domain are 0 and 1, 2 and 3, or 4 and 5; and subcarrier indexes occupied by the second group of REs in frequency domain are 6 and 7, 8 and 9, or 10 and 11.

In a possible design, the first group of REs includes four REs, and the first group of REs occupies two consecutive subcarriers in frequency domain and two consecutive orthogonal frequency division multiplexing OFDM symbols in time domain. The second group of REs includes four REs, and the second group of REs occupies two consecutive subcarriers in frequency domain and two consecutive OFDM symbols in time domain. The two consecutive subcarriers occupied by the first group of REs and the two consecutive subcarriers occupied by the second group of REs are the same subcarriers. The two consecutive OFDM symbols occupied by the first group of REs and the two consecutive OFDM symbols occupied by the second group of REs are different OFDM symbols.

In a possible design, subcarrier indexes occupied by the first group of REs in frequency domain are 0 and 1, 2 and 3, or 4 and 5; and subcarrier indexes occupied by the second group of REs in frequency domain are 0 and 1, 2 and 3, or 4 and 5.

In a possible design, the first group of REs includes four REs, and the first group of REs occupies two inconsecutive subcarriers in frequency domain and two consecutive orthogonal frequency division multiplexing OFDM symbols in time domain. The second group of REs includes four REs, and the second group of REs occupies two inconsecutive subcarriers in frequency domain and two consecutive OFDM symbols in time domain. The two inconsecutive subcarriers occupied by the first group of REs and the two inconsecutive subcarriers occupied by the second group of REs are located in different RBs. The two consecutive OFDM symbols occupied by the first group of REs and the two consecutive OFDM symbols occupied by the second group of REs are the same OFDM symbols.

FIG. 8 shows an apparatus 800 according to an embodiment of this application. The apparatus shown in FIG. 8 may be implemented by a hardware circuit of the apparatus shown in FIG. 7. The communication apparatus is applicable to the flowchart shown in FIG. 3, and performs a function of the terminal device or the network device in the foregoing method embodiments. For ease of description, FIG. 8 shows only main components of the communication apparatus.

The apparatus 800 shown in FIG. 8 includes at least one processor 820, configured to implement any method in FIG. 3 provided in embodiments of this application.

The apparatus 800 may further include at least one memory 830, configured to store program instructions and/or data. The memory 830 is coupled to the processor 820. The coupling in this embodiment of this application is indirect coupling or a communication connection between apparatuses, units, or modules for information exchange between the apparatuses, the units, or the modules, and may be in electrical, mechanical, or other forms. The processor 820 may operate in collaboration with the memory 830. The processor 820 may execute the program instructions stored in the memory 830. At least one of the at least one memory may be included in the processor.

In an implementation process, steps in the foregoing methods may be implemented by using a hardware integrated logical circuit in the processor, or by using instructions in a form of software. The steps of the methods disclosed with reference to embodiments of this application may be performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be implemented by using a hardware integrated logical circuit in the processor, or by using instructions in a form of software. The foregoing processor may be a general-purpose processor, a digital signal processing circuit (digital signal processor, DSP), an application-specific integrated circuit (application-specific integrated circuit, ASIC), a field programmable gate array (field programmable gate array, FPGA), another programmable logic device, a discrete gate or transistor logic device, or a discrete hardware component. The processor may implement or perform the methods, the steps, and the logical block diagrams disclosed in embodiments of this application. The general-purpose processor may be a microprocessor, or the processor may be any conventional processor or the like. The steps of the methods disclosed with reference to embodiments of this application may be performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

The apparatus 800 may further include a communication interface 810, configured to communicate with another device through a transmission medium, so that an apparatus in the apparatus 800 can communicate with the another device. In this embodiment of this application, the communication interface may be a transceiver, a circuit, a bus, a module, or a communication interface of another type. In this embodiment of this application, when the communication interface is the transceiver, the transceiver may include an independent receiver and an independent transmitter, or may be a transceiver integrated with a transceiver function, or may be an interface circuit.

The apparatus 800 may further include a communication line 840. The communication interface 810, the processor 820, and the memory 830 may be connected to each other through the communication line 840. The communication line 840 may be a peripheral component interconnect (peripheral component interconnect, PCI) bus, an extended industry standard architecture (extended industry standard architecture, EISA) bus, or the like. The communication line 840 may be classified into an address bus, a data bus, a control bus, and the like. For ease of representation, only one thick line is for representing the bus in FIG. 8, but this does not mean that there is only one bus or only one type of bus.

It should be understood that the processor 820 is configured to execute the instructions or the program stored in the memory 830. When the instructions or the program stored in the memory 830 are/is executed, the processor 820 is configured to perform an operation performed by the processing unit 701 in the foregoing embodiment, and the communication interface 810 is configured to perform an operation performed by the communication unit 702 in the foregoing embodiment. For details, refer to the foregoing descriptions. Details are not described herein again.

An embodiment of this application further provides a computer-readable storage medium. The computer-readable storage medium stores a computer program. When the program is executed by a processor, a procedure related to the terminal device in the embodiment shown in FIG. 3 provided in the foregoing method embodiments may be implemented.

An embodiment of this application further provides a computer-readable storage medium. The computer-readable storage medium stores a computer program. When the program is executed by a processor, a procedure related to the network device in the embodiment shown in FIG. 3 provided in the foregoing method embodiments may be implemented.

An embodiment of this application further provides a computer program product including instructions. When the instructions are executed, the method performed by the terminal device in the method embodiment shown in FIG. 3 is performed.

An embodiment of this application further provides a computer program product including instructions. When the instructions are executed, the method performed by the network device in the method embodiment shown in FIG. 3 is performed.

An embodiment of this application further provides a chip, including a processor. The processor is coupled to a memory, and is configured to execute a computer program or instructions stored in the memory. When the processor executes the computer program or the instructions, the processor performs the method performed by the terminal device in the method embodiment shown in FIG. 3.

An embodiment of this application further provides a chip, including a processor. The processor is coupled to a memory, and is configured to execute a computer program or instructions stored in the memory. When the processor executes the computer program or the instructions, the processor performs the method performed by the network device in the method embodiment shown in FIG. 3.

It should be further understood that the first, the second, and various numbers in this specification are merely used for differentiation for ease of description, and are not construed as a limitation on the scope of this application.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that, a person skilled in the art can make various modifications and variations to this application without departing from the scope of this application. In this case, this application is intended to cover these modifications and variations of this application provided that they fall within the scope of the claims of this application. The invention is defined by the appended claims.

## Claims

1. A communication method performed by a network device, comprising:
sending (301), by the network device, indication information to a terminal device, wherein the indication information indicates a first demodulation reference signal DMRS port and a code division multiplexing CDM group in which the first DMRS port is located; and
receiving (304), by the network device in a first group of REs and a second group of REs associated with the CDM group, a first DMRS transmitted through the first DMRS port, wherein
first orthogonal cover code OCC for receiving the first DMRS in the first group of REs through the first DMRS port is different from second OCC for receiving the first DMRS in the second group of REs through the first DMRS port; and
the first group of REs and the second group of REs satisfy any one of the following conditions:
located in a same resource block RB;
located on a same subcarrier, and located in different symbols in a same slot; or
located in different resource blocks RBs, and located in a same symbol in a same slot;
**characterised in that** the indication information comprises a first DMRS port indication identifying the first DMRS port, wherein there is a relationship among the first DMRS port indication, a CDM group index, frequency domain OCC and time domain OCC; the relationship is one of the following:
| *p̃* | CD M group λ | Δ | w*_{f}*(*k' +* 2*t*) | | | | w*ₜ*(*l*') | |
|---|---|---|---|---|---|---|---|---|
| | | | *k'*=0 | *k'*=1 | *k'*=0 | *k'*=1 | *l'*=0 | *l'*=1 |
| | | | t=0 | t=0 | t=1 | t=1 | | |
| 0 | 0 | 0 | +1 | +1 | +1 | +1 | +1 | +1 |
| 1 | 0 | 0 | +1 | -1 | +1 | -1 | +1 | +1 |
| 2 | 1 | 2 | +1 | +1 | +1 | +1 | +1 | +1 |
| 3 | 1 | 2 | +1 | -1 | +1 | -1 | +1 | +1 |
| 4 | 2 | 4 | +1 | +1 | +1 | +1 | +1 | +1 |
| 5 | 2 | 4 | +1 | -1 | +1 | -1 | +1 | +1 |
| 6 | 0 | 0 | +1 | +1 | +1 | +1 | +1 | -1 |
| 7 | 0 | 0 | +1 | -1 | +1 | -1 | +1 | -1 |
| 8 | 1 | 2 | +1 | +1 | +1 | +1 | +1 | -1 |
| 9 | 1 | 2 | +1 | -1 | +1 | -1 | +1 | -1 |
| 10 | 2 | 4 | +1 | +1 | +1 | +1 | +1 | -1 |
| 11 | 2 | 4 | +1 | -1 | +1 | -1 | +1 | -1 |
| 12 | 0 | 0 | +1 | +1 | -1 | -1 | +1 | +1 |
| 13 | 0 | 0 | +1 | -1 | -1 | 1 | +1 | +1 |
| 14 | 1 | 2 | +1 | +1 | -1 | -1 | +1 | +1 |
| 15 | 1 | 2 | +1 | -1 | -1 | 1 | +1 | +1 |
| 16 | 2 | 4 | +1 | +1 | -1 | -1 | +1 | +1 |
| 17 | 2 | 4 | +1 | -1 | -1 | 1 | +1 | +1 |
| 18 | 0 | 0 | +1 | +1 | -1 | -1 | +1 | -1 |
| 19 | 0 | 0 | +1 | -1 | -1 | 1 | +1 | -1 |
| 20 | 1 | 2 | +1 | +1 | -1 | -1 | +1 | -1 |
| 21 | 1 | 2 | +1 | -1 | -1 | 1 | +1 | -1 |
| 22 | 2 | 4 | +1 | +1 | -1 | -1 | +1 | -1 |
| 23 | 2 | 4 | +1 | -1 | -1 | 1 | +1 | -1 |
wherein *p̃* represents a DMRS port number that sends a DMRS, and λ represents a CDM group index, w*_{f}*(*k'^{,} + 2t)* represents frequency domain OCC; *wₜ*(*l'*) represents time domain OCC;
wherein Δ is a subcarrier offset, wherein a value of Δ is associated with a CDM group index, k is a subcarrier index, 1 is an OFDM symbol index, and when t=0, w_{f} (k' + 2t) and wₜ (l') are used to determine the first OCC in the first group of REs, when t=1, w_{f} (k' + 2t) and wₜ (l') are used to determine the second OCC in the second group of REs.

2. The method according to claim 1, wherein the CDM group further comprises a second DMRS port, and the method further comprises:
receiving, by the network device in the first group of REs and the second group of REs, a second DMRS sent through the second DMRS port, wherein
the second DMRS port uses third OCC in the first group of REs, and uses fourth OCC in the second group of REs; and
first extended OCC corresponding to the first DMRS port is orthogonal to second extended OCC corresponding to the second DMRS port, the first extended OCC comprises the first OCC and the second OCC, and the second extended OCC comprises the third OCC and the fourth OCC.

3. The method according to claim 1 or 2, wherein the first DMRS that is transmitted through the first DMRS port and that is weighted by using the first OCC or the second OCC satisfies the following formula: ${{{α}^{˜}}^{˜}}_{k , l}^{\left({{p}^{˜}}_{j}, μ\right)} = {w}_{f} \left(k′+2t\right) {w}_{t} \left(l′\right) r \left(2n+k′\right)$ $k = 6 n + k ′ + Δ$ $k ′ = 0 , 1$ $t = mod \left(n, 2\right)$ $l = \overline{l} + l ′$ $n = 0 , 1 , …$ $j = 0 , 1 , … , ν - 1$ wherein ${{α}^{˜}}_{k , l}^{\left({{p}^{˜}}_{j}, μ\right)}$ represents a sequence corresponding to the first DMRS that is transmitted through the first DMRS port and that is weighted by using the first OCC or the second OCC; k is a subcarrier index; *l* is an OFDM symbol index; *p ⱼ* is a first DMRS port index; mod() is a modulo operation; r(n) is an initial sequence corresponding to the first DMRS; when t=0, w*_{f}*(*k' + 2t)* and w*ₜ*(*l'*) are used to determine the first OCC in the first group of REs; when t=1, w*_{f}*(*k' + 2t)* and w*ₜ*(*l'*) are used to determine the second OCC in the second group of REs; Δ is a subcarrier offset, wherein a value of Δ is associated with a CDM group index; *l̅* is an OFDM symbol offset; µ is a subcarrier spacing index; w*_{f}*(*k' + 2t)* represents frequency domain OCC; w*ₜ*(*l'*) represents time domain OCC; and v is a layer index.

4. The method according to any one of claims 1 to 3, wherein the first group of REs comprises four REs, and the first group of REs occupies two consecutive subcarriers in frequency domain, and occupies two consecutive orthogonal frequency division multiplexing OFDM symbols in time domain; and
the second group of REs comprises four REs, and the second group of REs occupies two consecutive subcarriers in frequency domain, and occupies two consecutive OFDM symbols in time domain, wherein
the two consecutive subcarriers occupied by the first group of REs and the two consecutive subcarriers occupied by the second group of REs are different subcarriers; and the two consecutive OFDM symbols occupied by the first group of REs and the two consecutive OFDM symbols occupied by the second group of REs are the same OFDM symbols.

5. The method according to claim 4, wherein subcarrier indexes occupied by the first group of REs in frequency domain are 0 and 1, 2 and 3, or 4 and 5; and
subcarrier indexes occupied by the second group of REs in frequency domain are 6 and 7, 8 and 9, or 10 and 11.

6. A communication method performed by a terminal device, comprising:
receiving (302), by the terminal device, indication information, wherein the indication information indicates a first demodulation reference signal DMRS port and a code division multiplexing CDM group in which the first DMRS port is located;
determining (302), by the terminal device, N groups of resource elements REs corresponding to the CDM group indicated by the indication information, wherein N is an integer greater than 1; and
transmitting (303), by the terminal device, a first DMRS in a first group of REs and a second group of REs in the N groups of REs through the first DMRS port indicated by the indication information, wherein
first orthogonal cover code OCC is used to transmit the first DMRS in the first group of REs through the first DMRS port, second OCC is used to transmit the first DMRS in the second group of REs through the first DMRS port, and the first OCC is different from the second OCC; and
the first group of REs and the second group of REs satisfy any one of the following conditions:
located in a same resource block RB;
located on a same subcarrier, and located in different symbols in a same slot; or
located in different resource blocks RBs, and located in a same symbol in a same slot;
**characterised in that** the indication information comprises a first DMRS port indication identifying the first DMRS port, there is a relationship among the first DMRS port indication, a CDM group index, frequency domain OCC and time domain OCC; the relationship is one of the following:
| *p̃* | CD M group λ | Δ | w*_{f}*(*k' +* 2*t*) | | | | w*ₜ*(*l'*) | |
|---|---|---|---|---|---|---|---|---|
| | | | *k'=*0 | *k'*=1 | *k'*=0 | *k'*=1 | *l'*=0 | *l'*=1 |
| | | | t=0 | t=0 | t=1 | t=1 | | |
| 0 | 0 | 0 | +1 | +1 | +1 | +1 | +1 | +1 |
| 1 | 0 | 0 | +1 | -1 | +1 | -1 | +1 | +1 |
| 2 | 1 | 2 | +1 | +1 | +1 | +1 | +1 | +1 |
| 3 | 1 | 2 | +1 | -1 | +1 | -1 | +1 | +1 |
| 4 | 2 | 4 | +1 | +1 | +1 | +1 | +1 | +1 |
| 5 | 2 | 4 | +1 | -1 | +1 | -1 | +1 | +1 |
| 6 | 0 | 0 | +1 | +1 | +1 | +1 | +1 | -1 |
| 7 | 0 | 0 | +1 | -1 | +1 | -1 | +1 | -1 |
| 8 | 1 | 2 | +1 | +1 | +1 | +1 | +1 | -1 |
| 9 | 1 | 2 | +1 | -1 | +1 | -1 | +1 | -1 |
| 10 | 2 | 4 | +1 | +1 | +1 | +1 | +1 | -1 |
| 11 | 2 | 4 | +1 | -1 | +1 | -1 | +1 | -1 |
| 12 | 0 | 0 | +1 | +1 | -1 | -1 | +1 | +1 |
| 13 | 0 | 0 | +1 | -1 | -1 | 1 | +1 | +1 |
| 14 | 1 | 2 | +1 | +1 | -1 | -1 | +1 | +1 |
| 15 | 1 | 2 | +1 | -1 | -1 | 1 | +1 | +1 |
| 16 | 2 | 4 | +1 | +1 | -1 | -1 | +1 | +1 |
| 17 | 2 | 4 | +1 | -1 | -1 | 1 | +1 | +1 |
| 18 | 0 | 0 | +1 | +1 | -1 | -1 | +1 | -1 |
| 19 | 0 | 0 | +1 | -1 | -1 | 1 | +1 | -1 |
| 20 | 1 | 2 | +1 | +1 | -1 | -1 | +1 | -1 |
| 21 | 1 | 2 | +1 | -1 | -1 | 1 | +1 | -1 |
| 22 | 2 | 4 | +1 | +1 | -1 | -1 | +1 | -1 |
| 23 | 2 | 4 | +1 | -1 | -1 | 1 | +1 | -1 |
wherein *p̃* represents a DMRS port number that sends a DMRS, and λ represents a CDM group index, w*_{f}*(*k' + 2t)* represents frequency domain OCC; *wₜ*(*l*') represents time domain OCC;
wherein Δ is a subcarrier offset, wherein a value of Δ is associated with a CDM group index, k is a subcarrier index, 1 is an OFDM symbol index, and when t=0, w_{f} (k' + 2t) and wₜ (l') are used to determine the first OCC in the first group of REs, when t=1, w_{f} (k' + 2t) and wₜ (l') are used to determine the second OCC in the second group of REs.

7. The method according to claim 6, wherein the first DMRS that is transmitted through the first DMRS port and that is weighted by using the first OCC or the second OCC satisfies the following formula: ${{α}^{˜}}_{k , l}^{\left({{p}^{˜}}_{j}, μ\right)} = {w}_{f} \left(k′+2t\right) {w}_{t} \left(l′\right) r \left(2n+k′\right)$ $k = 6 n + k ′ + Δ$ $k ′ = 0 , 1$ $t = mod \left(n, 2\right)$ $\begin{matrix}l = \overline{l} + l ′ \\ n = 0 , 1 , …\end{matrix}$ $j = 0 , 1 , … , ν - 1$ wherein ${{α}^{˜}}_{k , l}^{\left({{p}^{˜}}_{j}, μ\right)}$ represents a sequence corresponding to the first DMRS that is transmitted through the first DMRS port and that is weighted by using the first OCC or the second OCC; k is a subcarrier index; *l* is an OFDM symbol index; *p̃ⱼ* is a first DMRS port index; mod() is a modulo operation; r(n) is an initial sequence corresponding to the first DMRS; when t=0, *w_{f}*(*k^{'} +* 2*t*) and *wₜ*(*l^{'}*) are used to determine the first OCC in the first group of REs; when t=1, w*_{f}*(*k*^{'} *+* 2*t*) and *wₜ*(*l^{'}*) are used to determine the second OCC in the second group of REs; Δ is a subcarrier offset, wherein a value of Δ is associated with a CDM group index; *l̅* is an OFDM symbol offset; µ is a subcarrier spacing index; w*_{f}*(*k^{'}* + 2*t*) represents frequency domain OCC; *wₜ*(*l*^{'}) represents time domain OCC; and v is a layer index.

8. The method according to claim 6 or 7, wherein the first group of REs comprises four REs, and the first group of REs occupies two consecutive subcarriers in frequency domain, and occupies two consecutive orthogonal frequency division multiplexing OFDM symbols in time domain; and
the second group of REs comprises four REs, and the second group of REs occupies two consecutive subcarriers in frequency domain, and occupies two consecutive OFDM symbols in time domain, wherein
the two consecutive subcarriers occupied by the first group of REs and the two consecutive subcarriers occupied by the second group of REs are different subcarriers; and the two consecutive OFDM symbols occupied by the first group of REs and the two consecutive OFDM symbols occupied by the second group of REs are the same OFDM symbols.

9. The method according to claim 8, wherein subcarrier indexes occupied by the first group of REs in frequency domain are 0 and 1, 2 and 3, or 4 and 5; and
subcarrier indexes occupied by the second group of REs in frequency domain are 6 and 7, 8 and 9, or 10 and 11.

10. The method according to claim 6 or 7, wherein the first group of REs comprises four REs, and the first group of REs occupies two consecutive subcarriers in frequency domain, and occupies two consecutive orthogonal frequency division multiplexing OFDM symbols in time domain; and
the second group of REs comprises four REs, and the second group of REs occupies two consecutive subcarriers in frequency domain, and occupies two consecutive OFDM symbols in time domain, wherein
the two consecutive subcarriers occupied by the first group of REs and the two consecutive subcarriers occupied by the second group of REs are the same subcarriers; and the two consecutive OFDM symbols occupied by the first group of REs and the two consecutive OFDM symbols occupied by the second group of REs are different OFDM symbols.

11. A communication apparatus, configured to perform the method according to any one of claims 1 to 10.

12. A computer program product comprising instructions which, when executed by a computer, cause the computer to carry out the method of any one of claims 1 to 10.

## Patentansprüche

1. Kommunikationsverfahren, das durch eine Netzvorrichtung ausgeführt wird, das Folgendes umfasst:
Senden (301) durch die Netzvorrichtung von Angabeinformationen an eine Endgerätevorrichtung, wobei die Angabeinformationen einen ersten Demodulationsreferenzsignal-Anschluss, DMRS-Anschluss, und eine Codemultiplex-Gruppe, CDM-Gruppe, angeben, in der sich der erste DMRS-Anschluss befindet; und
Empfangen (304) durch die Netzvorrichtung in einer ersten Gruppe von REs und einer zweiten Gruppe von REs, die der CDM-Gruppe zugeordnet sind, eines ersten DMRS, das durch den ersten DMRS-Anschluss übertragen wird, wobei
sich der erste orthogonale Abdeckungscode OCC zum Empfangen des ersten DMRS in der ersten Gruppe von REs durch den ersten DMRS-Anschluss von dem zweiten OCC zum Empfangen des ersten DMRS in der zweiten Gruppe von REs durch den ersten DMRS-Anschluss unterscheidet; und
die erste Gruppe von REs und die zweite Gruppe von REs eine der folgenden Bedingungen erfüllen:
befinden sich in demselben Betriebsmittelblock RB;
befinden sich auf demselben Unterträger und befinden sich in verschiedenen Symbolen in demselben Schlitz; oder
befinden sich in verschiedenen Betriebsmittelblöcken RBs und befinden sich in demselben Symbol in demselben Schlitz;
**dadurch gekennzeichnet, dass** die Angabeinformationen eine erste DMRS-Anschlussangabe umfassen, die den ersten DMRS-Anschluss identifiziert, wobei es eine Beziehung zwischen der ersten DMRS-Anschlussangabe, einem CDM-Gruppenindex, einem OCC im Frequenzbereich und einem OCC im Zeitbereich gibt; wobei die Beziehung eine der folgenden ist:
| p̃ | CDM-Gruppe λ | Δ | w_{f}(k' + 2t) | | | | wₜ(l') | |
|---|---|---|---|---|---|---|---|---|
| | | | k' = 0 | k' = 1 | k' = 0 | k'=1 | l' = 0 | l' = 1 |
| | | | t = 0 | t = 0 | t = 1 | t = 1 | | |
| 0 | 0 | 0 | +1 | +1 | +1 | +1 | +1 | +1 |
| 1 | 0 | 0 | +1 | -1 | +1 | -1 | +1 | +1 |
| 2 | 1 | 2 | +1 | +1 | +1 | +1 | +1 | +1 |
| 3 | 1 | 2 | +1 | -1 | +1 | -1 | +1 | +1 |
| 4 | 2 | 4 | +1 | +1 | +1 | +1 | +1 | +1 |
| | | t=0 | t=0 | t=1 | t=1 | | | |
|---|---|---|---|---|---|---|---|---|
| 5 | 2 | 4 | +1 | -1 | +1 | -1 | +1 | +1 |
| 6 | 0 | 0 | +1 | +1 | +1 | +1 | +1 | -1 |
| 7 | 0 | 0 | +1 | -1 | +1 | -1 | +1 | -1 |
| 8 | 1 | 2 | +1 | +1 | +1 | +1 | +1 | -1 |
| 9 | 1 | 2 | +1 | -1 | +1 | -1 | +1 | -1 |
| 10 | 2 | 4 | +1 | +1 | +1 | +1 | +1 | -1 |
| 11 | 2 | 4 | +1 | -1 | +1 | -1 | +1 | -1 |
| 12 | 0 | 0 | +1 | +1 | -1 | -1 | +1 | +1 |
| 13 | 0 | 0 | +1 | -1 | -1 | 1 | +1 | +1 |
| 14 | 1 | 2 | +1 | +1 | -1 | -1 | +1 | +1 |
| 15 | 1 | 2 | +1 | -1 | -1 | 1 | +1 | +1 |
| 16 | 2 | 4 | +1 | +1 | -1 | -1 | +1 | +1 |
| 17 | 2 | 4 | +1 | -1 | -1 | 1 | +1 | +1 |
| 18 | 0 | 0 | +1 | +1 | -1 | -1 | +1 | -1 |
| 19 | 0 | 0 | +1 | -1 | -1 | 1 | +1 | -1 |
| 20 | 1 | 2 | +1 | +1 | -1 | -1 | +1 | -1 |
| 21 | 1 | 2 | +1 | -1 | -1 | 1 | +1 | -1 |
| 22 | 2 | 4 | +1 | +1 | -1 | -1 | +1 | -1 |
| 23 | 2 | 4 | +1 | -1 | -1 | 1 | +1 | -1 |
wobei p eine DMRS-Anschlussnummer repräsentiert, die ein DMRS sendet, und λ einen CDM-Gruppenindex repräsentiert, w_{f}{k' + 2t) einen OCC im Frequenzbereich repräsentiert; wₜ(l') einen OCC im Zeitbereich repräsentiert; wobei Δ ein Unterträgerversatz ist, wobei ein Wert von Δ einem CDM-Gruppenindex zugeordnet ist, k ein Unterträgerindex ist, l ein OFDM-Symbolindex ist, und wenn t = 0, w_{f}{k' + 2t) und wₜ(l') verwendet werden, um den ersten OCC in der ersten Gruppe von REs zu bestimmen, wenn t = 1, w_{f}{k' + 2t) und wₜ(l') verwendet werden, um den zweiten OCC in der zweiten Gruppe von REs zu bestimmen.

2. Verfahren nach Anspruch 1, wobei die CDM-Gruppe ferner einen zweiten DMRS-Anschluss umfasst und das Verfahren ferner Folgendes umfasst:
Empfangen durch die Netzvorrichtung in der ersten Gruppe von REs und der zweiten Gruppe von REs eines zweiten DMRS, das durch den zweiten DMRS-Anschluss gesendet wird, wobei
der zweite DMRS-Anschluss den dritten OCC in der ersten Gruppe von REs verwendet und den vierten OCC in der zweiten Gruppe von REs verwendet; und
der erste erweiterte OCC, der dem ersten DMRS-Anschluss entspricht, zu dem zweiten erweiterten OCC, der dem zweiten DMRS-Anschluss entspricht, orthogonal ist, der erste erweiterte OCC den ersten OCC und den zweiten OCC umfasst und der zweite erweiterte OCC den dritten OCC und den vierten OCC umfasst.

3. Verfahren nach Anspruch 1 oder 2, wobei das erste DMRS, das durch den ersten DMRS-Anschluss übertragen wird und das unter Verwendung des ersten OCC oder des zweiten OCC gewichtet wird, die folgende Formel erfüllt: ${{α}^{˜}}_{k , l}^{\left({{p}^{˜}}_{j}, μ\right)} = {w}_{f} \left(k′+2t\right) {w}_{l} \left(l′\right) r \left(2n+k′\right)$ $k = 6 n + k ′ + Δ$ $k ′ = 0 , 1$ $t = mod \left(n, 2\right)$ $l = \overline{l} + l ′$ $n = 0 , 1 , …$ $j = 0 , 1 , … , v - 1$ wobei ${{α}^{˜}}_{k , l}^{\left({{p}^{˜}}_{j}, μ\right)}$ eine Folge repräsentiert, die dem ersten DMRS entspricht, das durch den ersten DMRS-Anschluss übertragen wird und das unter Verwendung des ersten OCC oder des zweiten OCC gewichtet wird; k ein Unterträgerindex ist; l ein OFDM-Symbolindex ist; p_{j̃} ein erster DMRS-Anschlussindex ist; mod() eine Modulo-Operation ist; r(n) eine Anfangsfolge ist, die dem ersten DMRS entspricht; wenn t = 0, w_{f}(k' + 2t) und wₜ(l') verwendet werden, um den ersten OCC in der ersten Gruppe von REs zu bestimmen; wenn t = 1, w_{f}(k' + 2t) und wₜ(l') verwendet werden, um den zweiten OCC in der zweiten Gruppe von REs zu bestimmen; Δ ein Unterträgerversatz ist, wobei ein Wert von Δ einem CDM-Gruppenindex zugeordnet ist; *l̅* ein OFDM-Symbolversatz ist; µ ein Unterträgerabstandsindex ist; w_{f}(k' + 2t) einen OCC im Frequenzbereich repräsentiert; wₜ(l') einen OCC im Zeitbereich repräsentiert; und v ein Schichtindex ist.

4. Verfahren nach einem der Ansprüche 1 bis 3, wobei die erste Gruppe von REs vier REs umfasst und die erste Gruppe von REs zwei aufeinanderfolgende Unterträger im Frequenzbereich belegt und zwei aufeinanderfolgende orthogonale Frequenzmultiplex-Symbole, OFDM-Symbole, im Zeitbereich belegt; und
die zweite Gruppe von REs vier REs umfasst, und die zweite Gruppe von REs zwei aufeinanderfolgende Unterträger im Frequenzbereich belegt und zwei aufeinanderfolgende OFDM-Symbole im Zeitbereich belegt, wobei
die zwei aufeinanderfolgenden Unterträger, die durch die erste Gruppe von REs belegt sind, und die zwei aufeinanderfolgenden Unterträger, die durch die zweite Gruppe von REs belegt sind, unterschiedliche Unterträger sind; und die zwei aufeinanderfolgenden OFDM-Symbole, die durch die erste Gruppe von REs belegt sind, und die zwei aufeinanderfolgenden OFDM-Symbole, die durch die zweite Gruppe von REs belegt sind, die gleichen OFDM-Symbole sind.

5. Verfahren nach Anspruch 4, wobei die Unterträgerindizes, die durch die erste Gruppe von REs im Frequenzbereich belegt sind, 0 und 1, 2 und 3 oder 4 und 5 sind; und
die Unterträgerindizes, die durch die zweite Gruppe von REs im Frequenzbereich belegt sind, 6 und 7, 8 und 9 oder 10 und 11 sind.

6. Kommunikationsverfahren, das durch eine Endgerätevorrichtung ausgeführt wird, wobei das Verfahren Folgendes umfasst:
Empfangen (302), durch die Endgerätevorrichtung, von Angabeinformationen, wobei die Angabeinformationen einen ersten Demodulationsreferenzsignal-Anschluss, DMRS-Anschluss, und eine Codemultiplex-Gruppe, CDM-Gruppe, angeben, in der sich der erste DMRS-Anschluss befindet;
Bestimmen (302) durch die Endgerätevorrichtung von N Gruppen von Betriebsmittelelementen REs, die der CDM-Gruppe entsprechen, die durch die Angabeinformationen angegeben wird, wobei N eine ganze Zahl größer als 1 ist; und
Übertragen (303) durch die Endgerätevorrichtung eines ersten DMRS in einer ersten Gruppe von REs und einer zweiten Gruppe von REs in den N Gruppen von REs durch den ersten DMRS-Anschluss, der durch die Angabeinformationen angegeben wird, wobei
der erste orthogonale Abdeckcode OCC verwendet wird, um das erste DMRS in der ersten Gruppe von REs durch den ersten DMRS-Anschluss zu übertragen, der zweite OCC verwendet wird, um das erste DMRS in der zweiten Gruppe von REs durch den ersten DMRS-Anschluss zu übertragen, und sich der erste OCC von dem zweiten OCC unterscheidet; und
die erste Gruppe von REs und die zweite Gruppe von REs eine der folgenden Bedingungen erfüllen:
befinden sich in demselben Betriebsmittelblock RB;
befinden sich auf demselben Unterträger und befinden sich in verschiedenen Symbolen in demselben Schlitz; oder
befinden sich in verschiedenen Betriebsmittelblöcken RBs und befinden sich in demselben Symbol in demselben Schlitz;
**dadurch gekennzeichnet, dass** die Angabeinformationen eine erste DMRS-Anschlussangabe umfassen, die den ersten DMRS-Anschluss identifiziert, es eine Beziehung zwischen der ersten DMRS-Anschlussangabe, einem CDM-Gruppenindex, einem OCC im Frequenzbereich und einem OCC im Zeitbereich gibt; wobei die Beziehung eine der folgenden ist:
| p̃ | CDM-Gruppe λ | Δ | w_{f}{k' + 2t) | | | | wₜ(l') | |
|---|---|---|---|---|---|---|---|---|
| | | | k'=0 | k' = 1 | k'=0 | k'= 1 | l' = 0 | l' = 1 |
| | | | t=0 | t=0 | t=1 | t=1 | | |
| 0 | 0 | 0 | +1 | +1 | +1 | +1 | +1 | +1 |
| 1 | 0 | 0 | +1 | -1 | +1 | -1 | +1 | +1 |
| 2 | 1 | 2 | +1 | +1 | +1 | +1 | +1 | +1 |
| 3 | 1 | 2 | +1 | -1 | +1 | -1 | +1 | +1 |
| 4 | 2 | 4 | +1 | +1 | +1 | +1 | +1 | +1 |
| 5 | 2 | 4 | +1 | -1 | +1 | -1 | +1 | +1 |
| 6 | 0 | 0 | +1 | +1 | +1 | +1 | +1 | -1 |
| 7 | 0 | 0 | +1 | -1 | +1 | -1 | +1 | -1 |
| 8 | 1 | 2 | +1 | +1 | +1 | +1 | +1 | -1 |
| 9 | 1 | 2 | +1 | -1 | +1 | -1 | +1 | -1 |
| 10 | 2 | 4 | +1 | +1 | +1 | +1 | +1 | -1 |
| 11 | 2 | 4 | +1 | -1 | +1 | -1 | +1 | -1 |
| 12 | 0 | 0 | +1 | +1 | -1 | -1 | +1 | +1 |
| 13 | 0 | 0 | +1 | -1 | -1 | 1 | +1 | +1 |
| 14 | 1 | 2 | +1 | +1 | -1 | -1 | +1 | +1 |
| 15 | 1 | 2 | +1 | -1 | -1 | 1 | +1 | +1 |
| 16 | 2 | 4 | +1 | +1 | -1 | -1 | +1 | +1 |
| 17 | 2 | 4 | +1 | -1 | -1 | 1 | +1 | +1 |
| 18 | 0 | 0 | +1 | +1 | -1 | -1 | +1 | -1 |
| 19 | 0 | 0 | +1 | -1 | -1 | 1 | +1 | -1 |
| 20 | 1 | 2 | +1 | +1 | -1 | -1 | +1 | -1 |
| 21 | 1 | 2 | +1 | -1 | -1 | 1 | +1 | -1 |
| 22 | 2 | 4 | +1 | +1 | -1 | -1 | +1 | -1 |
| 23 | 2 | 4 | +1 | -1 | -1 | 1 | +1 | -1 |
wobei p̃ eine DMRS-Anschlussnummer repräsentiert, die ein DMRS sendet, und λ einen CDM-Gruppenindex repräsentiert, w_{f}(k' + 2t) einen OCC im Frequenzbereich repräsentiert; wₜ(l') einen OCC im Zeitbereich repräsentiert; wobei Δ ein Unterträgerversatz ist, wobei ein Wert von Δ einem CDM-Gruppenindex zugeordnet ist, k ein Unterträgerindex ist, l ein OFDM-Symbolindex ist, und wenn t = 0, w_{f}(k' + 2t) und wₜ(l') verwendet werden, um den ersten OCC in der ersten Gruppe von REs zu bestimmen, wenn t = 1, w_{f}(k' + 2t) und wₜ(l') verwendet werden, um den zweiten OCC in der zweiten Gruppe von REs zu bestimmen.

7. Verfahren nach Anspruch 6, wobei das erste DMRS, das durch den ersten DMRS-Anschluss übertragen wird und das unter Verwendung des ersten OCC oder des zweiten OCC gewichtet wird, die folgende Formel erfüllt: ${{α}^{˜}}_{k , l}^{\left({{p}^{˜}}_{j}, μ\right)} = {w}_{f} \left(k′+2t\right) {w}_{l} \left(l′\right) r \left(2n+k′\right)$ $k = 6 n + k ′ + Δ$ $k ′ = 0 , 1$ $t = mod \left(n, 2\right)$ $l = \overline{l} + l ′$ $n = 0 , 1 , …$ $j = 0 , 1 , … , v - 1$ wobei ${{α}^{˜}}_{k , l}^{\left({{p}^{˜}}_{j}, μ\right)}$ eine Folge repräsentiert, die dem ersten DMRS entspricht, das durch den ersten DMRS-Anschluss übertragen wird und das unter Verwendung des ersten OCC oder des zweiten OCC gewichtet wird; k ein Unterträgerindex ist; l ein OFDM-Symbolindex ist; p̃ⱼ ein erster DMRS-Anschlussindex ist; mod() eine Modulo-Operation ist; r(n) eine Anfangsfolge ist, die dem ersten DMRS entspricht; wenn t = 0, w_{f}(k' + 2t) und wₜ(l') verwendet werden, um den ersten OCC in der ersten Gruppe von REs zu bestimmen; wenn t = 1, w_{f}(k' + 2t) und wₜ(l') verwendet werden, um den zweiten OCC in der zweiten Gruppe von REs zu bestimmen; Δ ein Unterträgerversatz ist, wobei ein Wert von Δ einem CDM-Gruppenindex zugeordnet ist; l̅ ein OFDM-Symbolversatz ist; µ ein Unterträgerabstandsindex ist; w_{f}(k' + 2t) einen OCC im Frequenzbereich repräsentiert; wₜ(l') einen OCC im Zeitbereich repräsentiert; und v ein Schichtindex ist.

8. Verfahren nach Anspruch 6 oder 7, wobei die erste Gruppe von REs vier REs umfasst und die erste Gruppe von REs zwei aufeinanderfolgende Unterträger im Frequenzbereich belegt und zwei aufeinanderfolgende orthogonale Frequenzmultiplex-Symbole, OFDM-Symbole, im Zeitbereich belegt; und
die zweite Gruppe von REs vier REs umfasst, und die zweite Gruppe von REs zwei aufeinanderfolgende Unterträger im Frequenzbereich belegt und zwei aufeinanderfolgende OFDM-Symbole im Zeitbereich belegt, wobei
die zwei aufeinanderfolgenden Unterträger, die durch die erste Gruppe von REs belegt sind, und die zwei aufeinanderfolgenden Unterträger, die durch die zweite Gruppe von REs belegt sind, unterschiedliche Unterträger sind; und die zwei aufeinanderfolgenden OFDM-Symbole, die durch die erste Gruppe von REs belegt sind, und die zwei aufeinanderfolgenden OFDM-Symbole, die durch die zweite Gruppe von REs belegt sind, die gleichen OFDM-Symbole sind.

9. Verfahren nach Anspruch 8, wobei Unterträgerindizes, die durch die erste Gruppe von REs im Frequenzbereich belegt sind, 0 und 1, 2 und 3 oder 4 und 5 sind; und
die Unterträgerindizes, die durch die zweite Gruppe von REs im Frequenzbereich belegt sind, 6 und 7, 8 und 9 oder 10 und 11 sind.

10. Verfahren nach Anspruch 6 oder 7, wobei die erste Gruppe von REs vier REs umfasst und die erste Gruppe von REs zwei aufeinanderfolgende Unterträger im Frequenzbereich belegt und zwei aufeinanderfolgende orthogonale Frequenzmultiplex-Symbole, OFDM-Symbole, im Zeitbereich belegt; und
die zweite Gruppe von REs vier REs umfasst, und die zweite Gruppe von REs zwei aufeinanderfolgende Unterträger im Frequenzbereich belegt und zwei aufeinanderfolgende OFDM-Symbole im Zeitbereich belegt, wobei
die zwei aufeinanderfolgenden Unterträger, die durch die erste Gruppe von REs belegt sind, und die zwei aufeinanderfolgenden Unterträger, die durch die zweite Gruppe von REs belegt sind, die gleichen Unterträger sind; und die zwei aufeinanderfolgenden OFDM-Symbole, die durch die erste Gruppe von REs belegt sind, und die zwei aufeinanderfolgenden OFDM-Symbole, die durch die zweite Gruppe von REs belegt sind, unterschiedliche OFDM-Symbole sind.

11. Kommunikationsvorrichtung, die konfiguriert ist, das Verfahren nach einem der Ansprüche 1 bis 10 auszuführen.

12. Computerprogrammprodukt, das Anweisungen umfasst, die, wenn sie durch einen Computer ausgeführt werden, den Computer veranlassen, das Verfahren nach einem der Ansprüche 1 bis 10 auszuführen.

## Revendications

1. Procédé de communication réalisé par un dispositif réseau, le procédé comprenant les étapes suivantes :
envoyer (301), par le dispositif réseau, des informations d'indication à un dispositif terminal, les informations d'indication indiquant un premier port de signal de référence de démodulation DMRS et un groupe de multiplexage par répartition de code CDM dans lequel se trouve le premier port DMRS ; et
recevoir (304), par le dispositif réseau dans un premier groupe de RE et un deuxième groupe de RE associés au groupe CDM, un premier DMRS transmis par le premier port DMRS, dans lequel
le premier code de couverture orthogonal OCC destiné à recevoir les premiers DMRS dans le premier groupe de RE par l'intermédiaire du premier port DMRS est différent du deuxième OCC destiné à recevoir les premiers DMRS du deuxième groupe de RE par l'intermédiaire du premier port DMRS ; et
le premier groupe de RE et le deuxième groupe de RE remplissent l'une quelconque des conditions suivantes :
il est situé dans un même bloc de ressource, RB ;
il est situé sur une même sous-porteuse, et est situé dans des symboles différents dans un même créneau ; ou
il est situé dans différents blocs de ressources, RB, et est situé dans un même symbole dans un même créneau ;
**caractérisé en ce que** les informations d'indication comprennent une première indication de port DMRS identifiant le premier port DMRS, dans lequel il existe une relation entre la première indication de port DMRS, un indice de groupe CDM, un OCC de domaine fréquentiel et un OCC de domaine temporel ; la relation étant l'une des suivantes :
| p̃ | groupe CDM λ | Δ | w_{f}(k' + 2t) | | | | wₜ(l') | |
|---|---|---|---|---|---|---|---|---|
| | | | k'=0 | k'=1 | k'=0 | k'=1 | l'=0 | l'=1 |
| | | | t=0 | t=0 | t=1 | t=1 | | |
| 0 | 0 | 0 | +1 | +1 | +1 | +1 | +1 | +1 |
| 1 | 0 | 0 | +1 | -1 | +1 | -1 | +1 | +1 |
| 2 | 1 | 2 | +1 | +1 | +1 | +1 | +1 | +1 |
| 3 | 1 | 2 | +1 | -1 | +1 | -1 | +1 | +1 |
| 4 | 2 | 4 | +1 | +1 | +1 | +1 | +1 | +1 |
| 5 | 2 | 4 | +1 | -1 | +1 | -1 | +1 | +1 |
| 6 | 0 | 0 | +1 | +1 | +1 | +1 | +1 | -1 |
| 7 | 0 | 0 | +1 | -1 | +1 | -1 | +1 | -1 |
| 8 | 1 | 2 | +1 | +1 | +1 | +1 | +1 | -1 |
| 9 | 1 | 2 | +1 | -1 | +1 | -1 | +1 | -1 |
| 10 | 2 | 4 | +1 | +1 | +1 | +1 | +1 | -1 |
| 11 | 2 | 4 | +1 | -1 | +1 | -1 | +1 | -1 |
| 12 | 0 | 0 | +1 | +1 | -1 | -1 | +1 | +1 |
| 13 | 0 | 0 | +1 | -1 | -1 | 1 | +1 | +1 |
| 14 | 1 | 2 | +1 | +1 | -1 | -1 | +1 | +1 |
| 15 | 1 | 2 | +1 | -1 | -1 | 1 | +1 | +1 |
| 16 | 2 | 4 | +1 | +1 | -1 | -1 | +1 | +1 |
| 17 | 2 | 4 | +1 | -1 | -1 | 1 | +1 | +1 |
| 18 | 0 | 0 | +1 | +1 | -1 | -1 | +1 | -1 |
| 19 | 0 | 0 | +1 | -1 | -1 | 1 | +1 | -1 |
| 20 | 1 | 2 | +1 | +1 | -1 | -1 | +1 | -1 |
| 21 | 1 | 2 | +1 | -1 | -1 | 1 | +1 | -1 |
| 22 | 2 | 4 | +1 | +1 | -1 | -1 | +1 | -1 |
| 23 | 2 | 4 | +1 | -1 | -1 | 1 | +1 | -1 |
dans lequel *p̃* représente un numéro de port DMRS qui envoie un DMRS, et λ représente un indice de groupe CDM, w_{f}{k' + 2t) représente un OCC de domaine fréquentiel ; wt(l') représente un OCC de domaine temporel ; dans lequel Δ est un décalage de sous-porteuse, dans lequel une valeur de Δ est associée à un indice de groupe CDM, k est un indice de sous-porteuse, l est un indice de symbole OFDM et, lorsque t=0, w_{f}(k' + 2t) et wₜ(l') sont utilisés pour déterminer le premier OCC dans le premier groupe de RE, lorsque t=1, w_{f}{k' + 2t) et wₜ(l') sont utilisés pour déterminer le deuxième OCC dans le deuxième groupe de RE.

2. Procédé selon la revendication 1, dans lequel le groupe CDM comprend en outre un deuxième port DMRS, et le procédé comprend en outre les étapes suivantes :
recevoir, par le dispositif réseau dans le premier groupe de RE et le deuxième groupe de RE, un deuxième DMRS envoyé par le deuxième port DMRS, dans lequel
le deuxième port DMRS utilise le troisième OCC dans le premier groupe de RE et le quatrième OCC dans le deuxième groupe de RE ; et
un premier OCC étendu correspondant au premier port DMRS est orthogonal au deuxième OCC étendu correspondant au deuxième port DMRS, le premier OCC étendu comprenant le premier OCC et le deuxième OCC étendu, et le deuxième OCC étendu comprenant le troisième OCC et le quatrième OCC.

3. Procédé selon la revendication 1 ou la revendication 2, dans lequel le premier DMRS qui est transmis par l'intermédiaire du premier port DMRS et qui est pondéré en utilisant le premier OCC ou le deuxième OCC satisfait à la formule suivante : ${{α}^{˜}}_{k , l}^{\left({{p}^{˜}}_{j}, μ\right)} = {w}_{f} \left(k′+2t\right) {w}_{l} \left(l′\right) r \left(2n+k′\right)$ $k = 6 n + k ′ + Δ$ $k ′ = 0 , 1$ $t = mod \left(n, 2\right)$ $l = \overline{l} + l ′$ $n = 0 , 1 , …$ $j = 0 , 1 , … , v - 1$ dans lequel ${{α}^{˜}}_{k , l}^{\left({{p}^{˜}}_{j}, μ\right)}$ représente une séquence correspondant au premier DMRS qui est transmise par le premier port DMRS et qui est pondérée en utilisant le premier OCC ou le deuxième OCC ; k est un indice de sous-porteuse ; l est un indice de symbole OFDM ; p̃ⱼ est un premier indice de port DMRS ; mod() est une opération modulo ; r(n) est une séquence initiale correspondant au premier DMRS ; lorsque t=0, w_{f}(k' + 2t) et wₜ(l') sont utilisés pour déterminer le premier OCC dans le premier groupe de RE ; lorsque t=1, w_{f}(k' + 2t) et wₜ(l') sont utilisés pour déterminer le deuxième OCC dans le deuxième groupe de RE ; Δ est un décalage de sous-porteuse, dans lequel une valeur de Δ est associée à un indice de groupe CDM ; l̅ est un décalage de symbole OFDM ; µ est un indice d'espacement de sous-porteuse ; w_{f}(k' + 2t) représente le code OCC de domaine fréquentiel ; wₜ(l') représente le code OCC de domaine temporel ; et v est un indice de couche.

4. Procédé selon l'une quelconque des revendications 1 à 3, dans lequel le premier groupe de RE comprend quatre RE, et le premier groupe de RE occupe deux sous-porteuses consécutives dans le domaine fréquentiel, et occupe deux symboles OFDM consécutifs de multiplexage par répartition orthogonale de la fréquence dans le domaine temporel ; et
le deuxième groupe de RE comprend quatre RE, et le deuxième groupe de RE occupe deux sous-porteuses consécutives dans le domaine fréquentiel, et occupe deux symboles OFDM consécutifs dans le domaine temporel, dans lequel
les deux sous-porteuses consécutives occupées par le premier groupe de RE et les deux sous-porteuses consécutives occupées par le deuxième groupe de RE sont des sous-porteuses différentes ; et les deux symboles OFDM consécutifs occupés par le premier groupe de RE et les deux symboles OFDM consécutifs occupés par le deuxième groupe de RE sont les mêmes symboles OFDM.

5. Procédé selon la revendication 4, dans lequel les indices de sous-porteuses occupés par le premier groupe de RE dans le domaine fréquentiel sont 0 et 1, 2 et 3, ou 4 et 5 ; et
les indices de sous-porteuses occupés par le deuxième groupe de RE dans le domaine fréquentiel sont 6 et 7, 8 et 9, ou 10 et 11.

6. Procédé de communication réalisé par un dispositif terminal, le procédé comprenant les étapes suivantes :
recevoir (302), par le dispositif terminal, des informations d'indication, les informations d'indication indiquant un premier port DMRS de signal de référence de démodulation et un groupe CDM de multiplexage par répartition de code dans lequel se trouve le premier port DMRS ;
déterminer (302), par le dispositif terminal, N groupes d'éléments de ressources RE correspondant au groupe CDM indiqué par les informations d'indication, N étant un entier supérieur à 1 ; et
transmettre (303), par le dispositif terminal, un premier DMRS dans un premier groupe de RE et un deuxième groupe de RE dans les N groupes de RE à travers le premier port DMRS indiqué par les informations d'indication, dans lequel
le premier code de couverture orthogonal OCC est utilisé pour transmettre le premier DMRS du premier groupe de RE par l'intermédiaire du premier port DMRS, le deuxième OCC est utilisé pour transmettre le premier DMRS du deuxième groupe de RE par l'intermédiaire du premier port DMRS, et le premier OCC est différent du deuxième OCC ; et
le premier groupe de RE et le deuxième groupe de RE remplissent l'une quelconque des conditions suivantes :
il est situé dans un même bloc de ressources, RB ;
il est situé sur une même sous-porteuse, et est situé dans des symboles différents dans un même créneau ; ou
il est situé dans différents blocs de ressources, RB, et est situé dans un même symbole dans un même créneau ;
**caractérisé en ce que** les informations d'indication comprennent une première indication de port DMRS identifiant le premier port DMRS, dans lequel il existe une relation entre la première indication de port DMRS, un indice de groupe CDM, un OCC de domaine fréquentiel et un OCC de domaine temporel ; la relation étant l'une des suivantes :
| *p̃* | groupe CDM λ | Δ | w_{f}(k' + 2t) | | | | wₜ(l') | |
|---|---|---|---|---|---|---|---|---|
| | | | k'=0 | k'=1 | k'=0 | k'=1 | l'=0 | l'=1 |
| | | | t=0 | t=0 | t=1 | t=1 | | |
| 0 | 0 | 0 | +1 | +1 | +1 | +1 | +1 | +1 |
| 1 | 0 | 0 | +1 | -1 | +1 | -1 | +1 | +1 |
| 2 | 1 | 2 | +1 | +1 | +1 | +1 | +1 | +1 |
| 3 | 1 | 2 | +1 | -1 | +1 | -1 | +1 | +1 |
| 4 | 2 | 4 | +1 | +1 | +1 | +1 | +1 | +1 |
| 5 | 2 | 4 | +1 | -1 | +1 | -1 | +1 | +1 |
| 6 | 0 | 0 | +1 | +1 | +1 | +1 | +1 | -1 |
| 7 | 0 | 0 | +1 | -1 | +1 | -1 | +1 | -1 |
| 8 | 1 | 2 | +1 | +1 | +1 | +1 | +1 | -1 |
| 9 | 1 | 2 | +1 | -1 | +1 | -1 | +1 | -1 |
| 10 | 2 | 4 | +1 | +1 | +1 | +1 | +1 | -1 |
| 11 | 2 | 4 | +1 | -1 | +1 | -1 | +1 | -1 |
| 12 | 0 | 0 | +1 | +1 | -1 | -1 | +1 | +1 |
| 13 | 0 | 0 | +1 | -1 | -1 | 1 | +1 | +1 |
| 14 | 1 | 2 | +1 | +1 | -1 | -1 | +1 | +1 |
| 15 | 1 | 2 | +1 | -1 | -1 | 1 | +1 | +1 |
| 16 | 2 | 4 | +1 | +1 | -1 | -1 | +1 | +1 |
| 17 | 2 | 4 | +1 | -1 | -1 | 1 | +1 | +1 |
| 18 | 0 | 0 | +1 | +1 | -1 | -1 | +1 | -1 |
| 19 | 0 | 0 | +1 | -1 | -1 | 1 | +1 | -1 |
| 20 | 1 | 2 | +1 | +1 | -1 | -1 | +1 | -1 |
| 21 | 1 | 2 | +1 | -1 | -1 | 1 | +1 | -1 |
| 22 | 2 | 4 | +1 | +1 | -1 | -1 | +1 | -1 |
| 23 | 2 | 4 | +1 | -1 | -1 | 1 | +1 | -1 |
dans lequel *p̃* présente un numéro de port DMRS qui envoie un DMRS, et λ représente un indice de groupe CDM, w_{f}{k' + 2t) représente un OCC de domaine fréquentiel ; wₜ(l') représente un OCC de domaine temporel ; dans lequel Δ est un décalage de sous-porteuse, dans lequel une valeur de Δ est associée à un indice de groupe CDM, k est un indice de sous-porteuse, l est un indice de symbole OFDM et, lorsque t=0, w_{f}{k' + 2t) et wₜ(l') sont utilisés pour déterminer le premier OCC dans le premier groupe de RE, lorsque t=1, w_{f}(k' + 2t) et wₜ(l') sont utilisés pour déterminer le deuxième OCC dans le deuxième groupe de RE.

7. Procédé selon la revendication 6, dans lequel le premier DMRS qui est transmis par l'intermédiaire du premier port DMRS et qui est pondéré en utilisant le premier OCC ou le deuxième OCC satisfait à la formule suivante : ${{α}^{˜}}_{k , l}^{\left({{p}^{˜}}_{j}, μ\right)} = {w}_{f} \left(k′+2t\right) {w}_{t} \left(l′\right) r \left(2n+k′\right)$ $k = 6 n + k ′ + Δ$ $k ′ = 0 , 1$ $t = mod \left(n, 2\right)$ $l = \overline{l} + l ′$ $n = 0 , 1 , …$ $j = 0 , 1 , … , v - 1$ dans lequel ${{α}^{˜}}_{k , l}^{\left({{p}^{˜}}_{j}, μ\right)}$ représente une séquence correspondant au premier DMRS qui est transmise par le premier port DMRS et qui est pondérée en utilisant le premier OCC ou le deuxième OCC ; k est un indice de sous-porteuse ; l est un indice de symbole OFDM ; p̃ⱼ est un premier indice de port DMRS ; mod() est une opération modulo ; r(n) est une séquence initiale correspondant au premier DMRS ; lorsque t=0, w_{f}{k' + 2t) et wₜ(l') sont utilisés pour déterminer le premier OCC dans le premier groupe de RE ; lorsque t=1, w_{f}(k' + 2t) et wₜ(l') sont utilisés pour déterminer le deuxième OCC dans le deuxième groupe de RE ; Δ est un décalage de sous-porteuse, dans lequel une valeur de Δ est associée à un indice de groupe CDM ; l̅ est un décalage de symbole OFDM ; µ est un indice d'espacement de sous-porteuse ; w_{f}{k' + 2t) représente le code OCC de domaine fréquentiel ; wₜ(l') représente le code OCC de domaine temporel ; et v est un indice de couche.

8. Procédé selon la revendication 6 ou la revendication 7, dans lequel le premier groupe de RE comprend quatre RE, et le premier groupe de RE occupe deux sous-porteuses consécutives dans le domaine fréquentiel, et occupe deux symboles OFDM consécutifs de multiplexage par répartition orthogonale de la fréquence dans le domaine temporel ; et
le deuxième groupe de RE comprend quatre RE, et le deuxième groupe de RE occupe deux sous-porteuses consécutives dans le domaine fréquentiel, et occupe deux symboles OFDM consécutifs dans le domaine temporel, dans lequel
les deux sous-porteuses consécutives occupées par le premier groupe de RE et les deux sous-porteuses consécutives occupées par le deuxième groupe de RE sont des sous-porteuses différentes ; et les deux symboles OFDM consécutifs occupés par le premier groupe de RE et les deux symboles OFDM consécutifs occupés par le deuxième groupe de RE sont les mêmes symboles OFDM.

9. Procédé selon la revendication 8, dans lequel les indices de sous-porteuses occupés par le premier groupe de RE dans le domaine fréquentiel sont 0 et 1, 2 et 3, ou 4 et 5 ; et
les indices de sous-porteuses occupés par le deuxième groupe de RE dans le domaine fréquentiel sont 6 et 7, 8 et 9, ou 10 et 11.

10. Procédé selon la revendication 6 ou la revendication 7, dans lequel le premier groupe de RE comprend quatre RE, et le premier groupe de RE occupe deux sous-porteuses consécutives dans le domaine fréquentiel, et occupe deux symboles OFDM consécutifs de multiplexage par répartition orthogonale de la fréquence dans le domaine temporel ; et
le deuxième groupe de RE comprend quatre RE, et le deuxième groupe de RE occupe deux sous-porteuses consécutives dans le domaine fréquentiel, et occupe deux symboles OFDM consécutifs dans le domaine temporel, dans lequel
les deux sous-porteuses consécutives occupées par le premier groupe de RE et les deux sous-porteuses consécutives occupées par le deuxième groupe de RE sont les mêmes sous-porteuses ; et les deux symboles OFDM consécutifs occupés par le premier groupe de RE et les deux symboles OFDM consécutifs occupés par le deuxième groupe de RE sont des symboles OFDM différents.

11. Appareil de communication, configuré pour réaliser le procédé selon l'une quelconque des revendications 1 à 10.

12. Produit programme d'ordinateur, comprenant des instructions qui, lorsqu'elles sont exécutées par un ordinateur, amènent l'ordinateur à effectuer le procédé de l'une quelconque des revendications 1 à 10.
